(19) Europäisches Patentamt / European Patent Office / Office européen des brevets

(11) **EP 4 529 008 A1**

(12) **EUROPEAN PATENT APPLICATION**

(43) Date of publication:
26.03.2025 Bulletin 2025/13

(21) Application number: 24200322.6

(22) Date of filing: 13.09.2024

(51) International Patent Classification (IPC):
**H02M 1/32** $^{(2007.01)}$

(52) Cooperative Patent Classification (CPC):
**H02M 1/325; H02J 3/32;** H02J 3/001; H02M 1/0025

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 22.09.2023 CN 202311240875

(71) Applicant: **Huawei Digital Power Technologies
Co., Ltd.**
**Shenzhen, Guangdong 518043 (CN)**

(72) Inventors:
• **ZHANG, Meiqing**
  **Shenzhen, Guangdong (CN)**
• **DONG, Mingxuan**
  **Shenzhen, Guangdong (CN)**
• **XIN, Kai**
  **Shenzhen, Guangdong (CN)**

(74) Representative: **Maiwald GmbH**
**Engineering**
**Elisenhof**
**Elisenstrasse 3**
**80335 München (DE)**

(54) **POWER CONVERTER, CONTROL METHOD FOR POWER CONVERTER, AND ENERGY STORAGE SYSTEM**

(57) This application provides a power converter, a control method for the power converter, and an energy storage system. The power converter includes a three-phase four-wire power conversion circuit and a controller. The controller is configured to: when a value of any phase of voltage of three phases of voltages output by the three-phase four-wire power conversion circuit is less than a first threshold, and a difference between values of any two phases of voltages is greater than a second threshold, adjust, based on voltage amplitudes of a positive-sequence voltage, a negative-sequence voltage, and a zero-sequence voltage that are output by the three-phase four-wire power conversion circuit, current amplitudes of a positive-sequence current, a negative-sequence current, and a zero-sequence current that are output by the three-phase four-wire power conversion circuit, so that an input voltage fluctuation of the three-phase four-wire power conversion circuit to be mitigated.

EP 4 529 008 A1

**Description**

**TECHNICAL FIELD**

This application relates to the field of energy technologies, and in particular, to a power converter, a control method for the power converter, and an energy storage system.

**BACKGROUND**

Currently, a micro grid generally includes apparatuses for distributed power generation, power load, energy storage, monitoring, protection, automation, and the like, and is a small-scale power supply and consumption system that can basically implement internal electric power and energy balance. When the microgrid runs independently, a specific proportion of an energy storage system needs to run in a voltage source (which is also referred to as grid-forming control) mode, to establish and maintain a voltage and a frequency of the system, provide dynamic active power for system load, and maintain secure and stable running of the system. Most of traditional grid-connected power converters use a three-phase three-wire topology structure. However, three-phase four-wire power converters have better flexibility and adaptability in low voltage systems, and the three-phase four-wire power converters are increasingly concerned by academia and applied in industry. If in a scenario of an industrial and commercial micro grid without transformer isolation, a power converter needs to have an unbalanced load carrying capability, the power converter needs to use a three-phase four-wire structure.

However, in comparison with those of the three-phase three-wire power converter, a control dimension and a degree of freedom of the three-phase four-wire power converter increase, and a control policy is complex accordingly. Especially, when an asymmetric fault occurs in a power grid connected to the power converter, problems in two aspects are caused: (a) Three phases of currents of the power converter are overcurrent, and a zero-sequence current of a neutral wire (an N wire) is overcurrent, (b) Improper control of the zero-sequence current causes a double-frequency fluctuation of active power, deteriorating a voltage fluctuation of a bus on a direct current side, and causing overvoltage protection of the direct current bus.

Therefore, the three-phase four-wire power converter has the following technical requirements: (a) Currents of four wires (which specifically include an A wire, a B wire, a C wire, and an N wire) of the three-phase four-wire power converter need to be controlled within a range allowed by hardware of the power converter, to avoid component damage caused by overcurrent. (b) The zero-sequence current is used to suppress the double-frequency fluctuation of the active power output by the power converter, to reduce the voltage fluctuation of the direct current bus.

**SUMMARY**

In view of this, this application provides a power converter, a control method for the power converter, and an energy storage system, to resolve a problem of a voltage fluctuation of a direct current bus caused by an asymmetric fault occurring in a power grid.

According to a first aspect, this application provides a power converter. The power converter includes a three-phase four-wire power conversion circuit and a controller. The controller is configured to determine, based on values of three phases of voltages output by the three-phase four-wire power conversion circuit, whether an asymmetric fault occurs in a power grid, where the asymmetric fault specifically includes a single-phase grounding fault, a two-phase short-circuit fault, and a two-phase short-circuit grounding fault. Specifically, the controller may determine, in a manner of determining that a value of any phase of voltage of the three phases of voltages output by the three-phase four-wire power conversion circuit is less than a first threshold (where the first threshold may also be referred to as a low voltage threshold), and determining that a difference between values of any two phases of voltages is greater than a second threshold, whether the asymmetric fault occurs in the power grid. The three-phase four-wire power conversion circuit generally includes components: a switching transistor, a diode, an inductor, a capacitor, and the like. A working state of the three-phase four-wire power conversion circuit may be implemented by adjusting working states of these components (for example, the switching transistor). The controller is connected to a control end of a component in the three-phase four-wire power conversion circuit, and the controller is configured to adjust a working state of the component in the three-phase four-wire power conversion circuit, so that when the asymmetric fault occurs in the power grid, the controller controls, based on voltage amplitudes and current amplitudes of a positive-sequence voltage, a negative-sequence voltage, and a zero-sequence voltage that are output by the three-phase four-wire power conversion circuit, current amplitudes of a positive-sequence current, a negative-sequence current, and a zero-sequence current that are output by the three-phase four-wire power conversion circuit, so that an input voltage fluctuation of the three-phase four-wire power conversion circuit to be mitigated, to mitigate a voltage fluctuation of a direct current bus caused by the asymmetric fault occurring in the power grid.

In some embodiments of this application, the controller is specifically configured to: adjust a correlation between the zero-sequence current amplitude and the negative-sequence voltage amplitude and the correlation between the zero-sequence current amplitude and the positive-sequence voltage amplitude; adjust a correlation between the positive-sequence current amplitude and the positive-sequence voltage amplitude and a correlation between the positive-sequence current amplitude and the zero-sequence voltage amplitude; and adjust a correlation between the negative-sequence current amplitude and the negative-sequence voltage amplitude and a correlation between the negative-sequence current amplitude and the zero-sequence voltage amplitude, so that the input voltage fluctuation of the three-phase four-wire power conversion circuit is mitigated.

In some embodiments of this application, the controller may control the positive-sequence current, the negative-sequence current, and the zero-sequence current that are output by the three-phase four-wire power conversion circuit to meet the following features, to avoid an overcurrent problem of the three-phase four-wire power conversion circuit. The controller may control the positive-sequence current amplitude to be in a positive correlation with the positive-sequence voltage amplitude, and the positive-sequence current amplitude to be in a positive correlation with the zero-sequence voltage amplitude; control the negative-sequence current amplitude to be in a positive correlation with the negative-sequence voltage amplitude, and the negative-sequence current amplitude to be in a negative correlation with the zero-sequence voltage amplitude; and control the zero-sequence current amplitude to be in a positive correlation with the negative-sequence voltage amplitude, and the zero-sequence current amplitude to be in a negative correlation with the positive-sequence voltage amplitude.

In some embodiments of this application, the controller is specifically configured to: control the positive-sequence current amplitude based on a weighted summation value of the positive-sequence voltage amplitude and the zero-sequence voltage amplitude; control the negative-sequence current amplitude based on a weighted difference between the negative-sequence voltage amplitude and the zero-sequence voltage amplitude; and control the negative-sequence current amplitude based on a smaller value in a weighted difference between the negative-sequence voltage amplitude and the positive-sequence voltage amplitude and a maximum zero-sequence current limit value allowed to flow through an N wire of the three-phase four-wire power converter. A first regulation coefficient is a weight of the positive-sequence voltage amplitude during weighted summation, and a value range of the first regulation coefficient is [0, 10]; and a second regulation coefficient is a weight of the zero-sequence voltage amplitude during weighted summation, and a value range of the second regulation coefficient is [0, 10]. A third regulation coefficient is a weight of the negative-sequence voltage amplitude during weighted difference calculation, and a value range of the third regulation coefficient is [0, 10]; and a fourth regulation coefficient is a weight of the zero-sequence voltage amplitude during weighted difference calculation, and a value range of the fourth regulation coefficient is [0, 10]. A fifth regulation coefficient is a weight of the negative-sequence voltage amplitude during weighted difference calculation, and a value range of the fifth regulation coefficient is [0, 10]; and a sixth regulation coefficient is a weight of the positive-sequence voltage amplitude during weighted difference calculation, and a value range of the sixth regulation coefficient is [0, 10].

In some embodiments of this application, the controller may adaptively adjust, with a change of a power grid condition, the first regulation coefficient for the positive correlation between the positive-sequence current amplitude and the positive-sequence voltage amplitude, so that the first regulation coefficient is in an inverse proportion to a sum of the positive-sequence voltage amplitude and the negative-sequence voltage amplitude, and the first regulation coefficient is in an inverse proportion to the zero-sequence current amplitude; and the controller may adaptively adjust, with the change of the power grid condition, the second regulation coefficient for the positive correlation between the positive-sequence current amplitude and the zero-sequence voltage amplitude, so that the second regulation coefficient is in an inverse proportion to the sum of the positive-sequence voltage amplitude and the negative-sequence voltage amplitude, and the second regulation coefficient is in a direct proportion to the zero-sequence current amplitude. The adaptive setting of the first regulation coefficient and the second regulation coefficient helps use the zero-sequence current and the negative-sequence current to jointly suppress a double-frequency fluctuation of active power, and improve a positive-sequence voltage support capability.

In some embodiments of this application, the controller may adaptively adjust, with a change of a power grid condition, the third regulation coefficient for the positive correlation between the negative-sequence current amplitude and the negative-sequence voltage amplitude, so that the third regulation coefficient is in an inverse proportion to a sum of the positive-sequence voltage amplitude and the negative-sequence voltage amplitude, and the third regulation coefficient is in an inverse proportion to the zero-sequence current amplitude; and the controller may adaptively adjust, with the change of the power grid condition, the fourth regulation coefficient for the negative correlation between the negative-sequence current amplitude and the zero-sequence voltage amplitude, so that the fourth regulation coefficient is in an inverse proportion to the sum of the positive-sequence voltage amplitude and the negative-sequence voltage amplitude, and the fourth regulation coefficient is in a direct proportion to the zero-sequence current amplitude. The adaptive setting of the third regulation coefficient and the fourth regulation coefficient helps use the zero-sequence current and the negative-sequence current to jointly suppress a double-frequency fluctuation of active power, and improve a positive-sequence voltage support capability.

In some embodiments of this application, the controller may adaptively adjust, with a change of a power grid condition, the fifth regulation coefficient for the positive correlation between the zero-sequence current amplitude and the negative-sequence voltage amplitude, so that the fifth regulation coefficient is in an inverse proportion to the zero-sequence voltage amplitude, and the fifth regulation coefficient is in a direct proportion to the positive-sequence current amplitude; and the controller may adaptively adjust, with the change of the power grid condition, the sixth regulation coefficient for the negative correlation between the zero-sequence current amplitude and the positive-sequence voltage amplitude, so that the sixth regulation coefficient is in an inverse proportion to the zero-sequence voltage amplitude, and the sixth regulation coefficient is in a direct proportion to the negative-sequence current amplitude. The adaptive setting of the fifth regulation coefficient and the sixth regulation coefficient helps use the zero-sequence current and the negative-sequence current to jointly suppress a double-frequency fluctuation of active power, and improve a positive-sequence voltage support capability.

In some embodiments of this application, when a total current amplitude of a sum of the positive-sequence current amplitude, the negative-sequence current amplitude, and the zero-sequence current amplitude is greater than a specified current limit amplitude, the controller may adjust the positive-sequence current amplitude to be not greater than a first current limit value, adjust the negative-sequence current amplitude to be not greater than a second current limit value, and adjust the zero-sequence current amplitude to be not greater than a third current limit value, where the first current limit value is a product of the positive-sequence current amplitude before adjustment and a ratio of the current limit amplitude to the total current amplitude, the second current limit value is a product of the negative-sequence current amplitude before adjustment and the ratio of the current limit amplitude to the total current amplitude, and the third current limit value is a product of the zero-sequence current amplitude before adjustment and the ratio of the current limit amplitude to the total current amplitude. In this way, any phase of current of three phases of currents of a power conditioning system does not exceed a preset phase of current, and a zero-sequence current of the N wire does not exceed an allowed zero-sequence rated current or an allowed maximum zero-sequence current limit value.

In some embodiments of this application, the controller may further control a positive-sequence active current value and a positive-sequence reactive current value that are output by the three-phase four-wire power conversion circuit to meet the following: the positive-sequence reactive current value is in a positive correlation with a positive-sequence voltage dip depth, and the positive-sequence voltage dip depth is a difference between a preset regulation voltage amplitude and the positive-sequence voltage amplitude; and the positive-sequence active current value is a principal square root of a difference between the first current limit value and a square of the positive-sequence reactive current value, so that a positive-sequence active current and a positive-sequence reactive current are obtained based on a priority principle of the positive-sequence voltage support capability.

In some embodiments of this application, the controller may further control a negative-sequence active current value and a negative-sequence reactive current value that are output by the three-phase four-wire power conversion circuit to meet the following: the negative-sequence active current value is a weighted summation value of a negative-sequence voltage d-axis component and a negative-sequence voltage q-axis component, a value range of a weight of the negative-sequence voltage d-axis component during weighted summation is [-10, 10], and a value range of a weight of the negative-sequence voltage q-axis component during weighted summation is [-10, 10]; and the negative-sequence reactive current value is a weighted summation value of the negative-sequence voltage d-axis component and the negative-sequence voltage q-axis component, a value range of a weight of the negative-sequence voltage d-axis component during weighted summation is [-10, 10], and a value range of a weight of the negative-sequence voltage q-axis component during weighted summation is [-10, 10], so that a negative-sequence active current and a negative-sequence reactive current are obtained based on a principle of improving voltage asymmetry and suppressing the double-frequency fluctuation of the active power.

In some embodiments of this application, the controller may further control a zero-sequence current real component and a zero-sequence current imaginary component that are output by the three-phase four-wire power conversion circuit to meet the following: the zero-sequence current real component is a weighted summation value of a zero-sequence voltage real component and a zero-sequence voltage imaginary component, a value range of a weight of the zero-sequence voltage real component during weighted summation is [-10, 10], and a value range of a weight of the zero-sequence voltage imaginary component during weighted summation is [-10, 10]; and the zero-sequence current imaginary component is a weighted summation value of the zero-sequence voltage real component and the zero-sequence voltage imaginary component, a value range of a weight of the zero-sequence voltage real component during weighted summation is [-10, 10], and a value range of a weight of the zero-sequence voltage imaginary component during weighted summation is [-10, 10], so that the zero-sequence current real component and the zero-sequence current imaginary component are obtained based on a principle of suppressing the double-frequency fluctuation of the active power.

According to a second aspect, this application provides an energy storage system. The energy storage system includes an energy storage unit and the power converter according to any possible design in the first aspect. The energy storage unit is connected to a three-phase four-wire power conversion circuit in the power converter, and the three-phase four-wire power conversion circuit is configured to convert a direct current stored in the energy storage unit into an alternating current and, output the alternating current to a power grid.

According to a third aspect, this application provides a control method for a power converter. The power converter includes a three-phase four-wire power conversion circuit and a controller, the controller is configured to perform the control method, and the control method includes: when a value of any phase of voltage of values of three phases of voltages output by the three-phase four-wire power conversion circuit is less than a first threshold, and a difference between values of any two phases of voltages is greater than a second threshold, adjust, based on voltage amplitudes of a positive-sequence voltage, a negative-sequence voltage, and a zero-sequence voltage that are output by the three-phase four-wire power conversion circuit, current amplitudes of a positive-sequence current, a negative-sequence current, and a zero-sequence current that are output by the three-phase four-wire power conversion circuit, so that an input voltage fluctuation of the three-phase four-wire power conversion circuit to be mitigated, to mitigate a voltage fluctuation of a direct current bus caused by an asymmetric fault occurring in a power grid.

In some embodiments of this application, the adjusting, based on voltage amplitudes of a positive-sequence voltage, a negative-sequence voltage, and a zero-sequence voltage that are output by the three-phase four-wire power conversion circuit, current amplitudes of a positive-sequence current, a negative-sequence current, and a zero-sequence current that are output by the three-phase four-wire power conversion circuit, includes: adjusting a correlation between the zero-sequence current amplitude and the negative-sequence voltage amplitude and a correlation between the zero-sequence current amplitude and the positive-sequence voltage amplitude; adjusting a correlation between the positive-sequence current amplitude and the positive-sequence voltage amplitude and a correlation between the positive-sequence current amplitude and the zero-sequence voltage amplitude; and adjusting a correlation between the negative-sequence current amplitude and the negative-sequence voltage amplitude and a correlation between the negative-sequence current amplitude and the zero-sequence voltage amplitude, so that the input voltage fluctuation of the three-phase four-wire power conversion circuit is mitigated.

In some embodiments of this application, the control method further includes: controlling the zero-sequence current amplitude to be in a positive correlation with the negative-sequence voltage amplitude, and the zero-sequence current amplitude to be in a negative correlation with the positive-sequence voltage amplitude; controlling the positive-sequence current amplitude of the positive-sequence current to be in a positive correlation with the positive-sequence voltage amplitudes, and the positive-sequence current amplitude to be in a positive correlation with the zero-sequence voltage amplitude; and controlling the negative-sequence current amplitude of the negative-sequence current to be in a positive correlation with the negative-sequence voltage amplitude, and the negative-sequence current amplitude to be in a negative correlation with the zero-sequence voltage amplitude.

In some embodiments of this application, the control method further includes: controlling the positive-sequence current amplitude based on a weighted summation value of the positive-sequence voltage amplitude and the zero-sequence voltage amplitude; controlling the negative-sequence current amplitude based on a weighted difference between the negative-sequence voltage amplitude and the zero-sequence voltage amplitude; and controlling the negative-sequence current amplitude based on a smaller value in a weighted difference between the negative-sequence voltage amplitude and the positive-sequence voltage amplitude and a maximum zero-sequence current limit value allowed to flow through an N wire of the three-phase four-wire converter. A first regulation coefficient is a weight of the positive-sequence voltage amplitude during weighted summation, and a value range of the first regulation coefficient is [0, 10]; and a second regulation coefficient is a weight of the zero-sequence voltage amplitude during weighted summation, and a value range of the second regulation coefficient is [0, 10]. A third regulation coefficient is a weight of the negative-sequence voltage amplitude during weighted difference calculation, and a value range of the third regulation coefficient is [0, 10]; and a fourth regulation coefficient is a weight of the zero-sequence voltage amplitude during weighted difference calculation, and a value range of the fourth regulation coefficient is [0, 10]. A fifth regulation coefficient is a weight of the negative-sequence voltage amplitude during weighted difference calculation, and a value range of the fifth regulation coefficient is [0, 10]; and a sixth regulation coefficient is a weight of the positive-sequence voltage amplitude during weighted difference calculation, and a value range of the sixth regulation coefficient is [0, 10].

In some embodiments of this application, the first regulation coefficient for the positive correlation between the positive-sequence current amplitude and the positive-sequence voltage amplitude may be further adjusted, so that the first regulation coefficient is in an inverse proportion to a sum of the positive-sequence voltage amplitude and the negative-sequence voltage amplitude, and the first regulation coefficient is in an inverse proportion to the zero-sequence current amplitude; and the second regulation coefficient for the positive correlation between the positive-sequence current amplitude and the zero-sequence voltage amplitude is adjusted, so that the second regulation coefficient is in an inverse proportion to the sum of the positive-sequence voltage amplitude and the negative-sequence voltage amplitude, and the second regulation coefficient is in a direct proportion to the zero-sequence current amplitude.

In some embodiments of this application, the third regulation coefficient for the positive correlation between the negative-sequence current amplitude and the negative-sequence voltage amplitude may be further adjusted, so that the third regulation coefficient is in an inverse proportion to a sum of the positive-sequence voltage amplitude and the negative-sequence voltage amplitude, and the third regulation coefficient is in an inverse proportion to the zero-sequence current amplitude; and the fourth regulation coefficient for the negative correlation between the negative-sequence current amplitude and the zero-sequence voltage amplitude is adjusted, so that the fourth regulation coefficient is in an inverse proportion to the sum of the positive-sequence voltage amplitude and the negative-sequence voltage amplitude, and the fourth regulation coefficient is in a direct proportion to the zero-sequence current amplitude.

In some embodiments of this application, the fifth regulation coefficient for the positive correlation between the zero-sequence current amplitude and the negative-sequence voltage amplitude may be further adjusted, so that the fifth regulation coefficient is in an inverse proportion to the zero-sequence voltage amplitude, and the fifth regulation coefficient is in a direct proportion to the positive-sequence current amplitude; and the sixth regulation coefficient for the negative correlation between the zero-sequence current amplitude and the positive-sequence voltage amplitude is adjusted, so that the sixth regulation coefficient is in an inverse proportion to the zero-sequence voltage amplitude, and the sixth regulation coefficient is in a direct proportion to the negative-sequence current amplitude.

In some embodiments of this application, the control method may specifically include: when a total current amplitude of a sum of the positive-sequence current amplitude, the negative-sequence current amplitude, and the zero-sequence current amplitude is greater than a specified current limit amplitude, adjusting the positive-sequence current amplitude to be not greater than a first current limit value, adjusting the negative-sequence current amplitude to be not greater than a second current limit value, and adjusting the zero-sequence current amplitude to be not greater than a third current limit value, where the first current limit value is a product of the positive-sequence current amplitude before adjustment and a ratio of the current limit amplitude to the total current amplitude, the second current limit value is a product of the negative-sequence current amplitude before adjustment and the ratio of the current limit amplitude to the total current amplitude, and the third current limit value is a product of the zero-sequence current amplitude before adjustment and the ratio of the current limit amplitude to the total current amplitude.

In some embodiments of this application, a positive-sequence active current value and a positive-sequence reactive current value that are output by the three-phase four-wire power conversion circuit may be further controlled to meet the following: the positive-sequence reactive current value is in a positive correlation with a positive-sequence voltage dip depth, and the positive-sequence voltage dip depth is a difference between a preset regulation voltage amplitude and the positive-sequence voltage amplitude; and the positive-sequence active current value is a principal square root of a difference between the first current limit value and a square of the positive-sequence reactive current value.

In some embodiments of this application, a negative-sequence active current value and a negative-sequence reactive current value that are output by the three-phase four-wire power conversion circuit may be further controlled to meet the following: the negative-sequence active current value is a weighted summation value of a negative-sequence voltage d-axis component and a negative-sequence voltage q-axis component, a value range of a weight of the negative-sequence voltage d-axis component during weighted summation is [-10, 10], and a value range of a weight of the negative-sequence voltage q-axis component during weighted summation is [-10, 10]; and the negative-sequence reactive current value is a weighted summation value of the negative-sequence voltage d-axis component and the negative-sequence voltage q-axis component, a value range of a weight of the negative-sequence voltage d-axis component during weighted summation is [-10, 10], and a value range of a weight of the negative-sequence voltage q-axis component during weighted summation is [-10, 10].

In some embodiments of this application, a zero-sequence current real component and a zero-sequence current imaginary component that are output by the three-phase four-wire power conversion circuit may be further controlled to meet the following: the zero-sequence current real component is a weighted summation value of a zero-sequence voltage real component and a zero-sequence voltage imaginary component, a value range of a weight of the zero-sequence voltage real component during weighted summation is [-10, 10], and a value range of a weight of the zero-sequence voltage imaginary component during weighted summation is [-10, 10]; and the zero-sequence current imaginary component is a weighted summation value of the zero-sequence voltage real component and the zero-sequence voltage imaginary component, a value range of a weight of the zero-sequence voltage real component during weighted summation is [-10, 10], and a value range of a weight of the zero-sequence voltage imaginary component during weighted summation is [-10, 10].

According to a fourth aspect, this application provides a computer-readable storage medium. The computer-readable storage medium stores computer instructions; and when the computer instructions are executed by a controller in an energy storage system, the controller may be enabled to perform the method according to any design in the third aspect.

According to a fifth aspect, this application provides a computer program product. The computer program product includes computer instructions; and when the computer instructions are executed by a controller in an energy storage system, the controller may be enabled to perform the method according to any design in the third aspect.

For technical effects that can be achieved by any possible design in any one of the second aspect to the fifth aspect, refer to descriptions of technical effects that can be achieved in any possible design in the first aspect. Details are not described herein again.

## BRIEF DESCRIPTION OF DRAWINGS

FIG. 1a is a diagram of a structure of a new energy system;

FIG. 1b is a diagram of another structure of a new energy system;

FIG. 2a is a diagram of a structure of an energy storage system according to an embodiment of this application;

FIG. 2b is a diagram of another structure of an energy storage system according to an embodiment of this application;

FIG. 3 is a schematic control flowchart of a controller in a power converter according to an embodiment of this application;

FIG. 4 is a schematic flowchart of a control method according to an embodiment of this application;

FIG. 5 is a diagram of comparison and verification effect after current control is performed according to different control policies when an asymmetric fault occurring in a power grid is a single-phase voltage dip; and

FIG. 6 is a diagram of comparison and verification effect after current control is performed according to different control policies when an asymmetric fault occurring in a power grid is a two-phase voltage dip.

## DESCRIPTION OF EMBODIMENTS

To make a person of ordinary skill in the art understand technical solutions in this application better, the following clearly and completely describes the technical solutions in embodiments of this application with reference to accompanying drawings.

It should be noted that, the terms "first", "second", and the like in the specification, claims, and accompanying drawings of this application are intended to distinguish between similar objects but do not necessarily indicate a specific order or sequence. It should be understood that data used in such a way is interchangeable in a proper circumstance, so that embodiments of this application described herein can be implemented in other orders than the order illustrated or described herein. Implementations described in the following example embodiments do not represent all implementations consistent with this application. On the contrary, the implementations are merely examples of apparatuses and methods that are described in the appended claims in detail and that are consistent with some aspects of this application.

In the following, some terms in embodiments of this application are explained and described to facilitate understanding of a person skilled in the art.

(1) In embodiments of this application, the term "a plurality of" means two or more, and another quantifier is similar to this.

(2) A power conditioning system (PCS) can perform conversion between an alternating current and a direct current by controlling charging and discharging of an energy storage unit, where the energy storage unit may be a battery or the like.

(3) A positive sequence, a negative sequence, and a zero sequence are used to analyze decomposition of asymmetrical components of three phases into symmetric components (the positive sequence and the negative sequence) and codirectional zero-sequence components when system voltages or system currents are asymmetric. In a three-phase four-wire power supply system, a sequence of phases of voltages passing through a same value (maximum or minimum) is referred to as a phase sequence of a three-phase power supply. If the sequence of the phases of voltages is A-B-C (or B-C-A or C-A-B), the phase sequence is a positive sequence or a sequential sequence. If the sequence of the phases of voltages passing through a same value is A-C-B (or C-B-A or B-A-C), the phase sequence is referred to as a negative sequence or a reverse sequence. In the three-phase four-wire power supply system, when the voltages or the currents are asymmetric, the asymmetric components can be decomposed into positive-sequence, negative-sequence, and zero-sequence components. Positive-sequence component= (phase-Avector+phase-B vector rotated 120° counterclockwise+phase-C vector rotated 240° counterclockwise)/3, negative-sequence component=(phase-A vector+phase-B vector rotated 240° counterclockwise+phase-C vector rotated 120° counterclockwise)/3, and zero-sequence component=(phase-A vector+phase-B vector+phase-C vector)/3. When a three-phase short-circuit fault occurs or the system runs properly, only the positive-sequence component exists in the system. When a single-phase grounding fault occurs, the positive-sequence component, the negative-sequence component, and the zero-sequence component exist in the system. When a two-phase short-circuit fault occurs, the positive-sequence component and the negative-sequence component exist in the system. When a two-phase short-circuit grounding fault occurs, the positive-sequence component, the negative-sequence component, and the zero-sequence component exist in the system.

(4) In the power supply system, there are two types of electric power supplied by the power supply to load: active power and reactive power. The active power is electric power required to maintain normal running of an electric device, namely, electric power that converts electric energy into another form of energy (mechanical energy, light energy, or thermal energy). The reactive power is electric power used for exchange of an electric field and a magnetic field in a circuit, and for the establishment and maintenance of the magnetic field in the electrical device. The reactive power does not work externally, but is converted into another form of energy. Based on this, the positive-sequence current may be decomposed into a positive-sequence active current and a positive-sequence reactive current, the negative-sequence current may be decomposed into a negative-sequence reactive current and a negative-sequence reactive current, and the zero-sequence current may be decomposed into a zero-sequence current real component and a zero-sequence current imaginary component.

(5) In control of a permanent magnet synchronous motor powered by an alternating current power supply system, a dq coordinate system is established on a rotor of the motor to obtain a control characteristic similar to that of a direct current motor. The coordinate system rotates synchronously with the rotor. A direction of a magnetic field of the rotor is a d axis, and a direction perpendicular to the magnetic field of the rotor is a q axis. In the dq coordinate system, a quadrature axis is also referred to as the q axis, and a direct axis is also referred to as the d axis. In the dq coordinate system, three phases of voltages output by the power supply system may be decomposed into a d-axis component and a q-axis component, and motor control can be implemented by controlling the d-axis component and the q-axis component. For example, if it is intended to control a torque of the motor, the d-axis component needs to be controlled. If it is intended to control a rotation speed of the motor, the q-axis component needs to be controlled. Therefore, in the dq coordinate system, a negative-sequence voltage may be decomposed into a negative-sequence voltage d-axis component and a negative-sequence voltage q-axis component.

Embodiments of this application provide a power converter, a control method for the power converter, and an energy storage system. To make the objectives, technical solutions, and advantages of this application clearer, the following further describes this application in detail with reference to the accompanying drawings.

The solutions disclosed in this application may be applied to a new energy system, and are applied to a grid-connected scenario of the new energy system. The new energy system may include but is not limited to a photovoltaic system, an energy storage system, and the like.

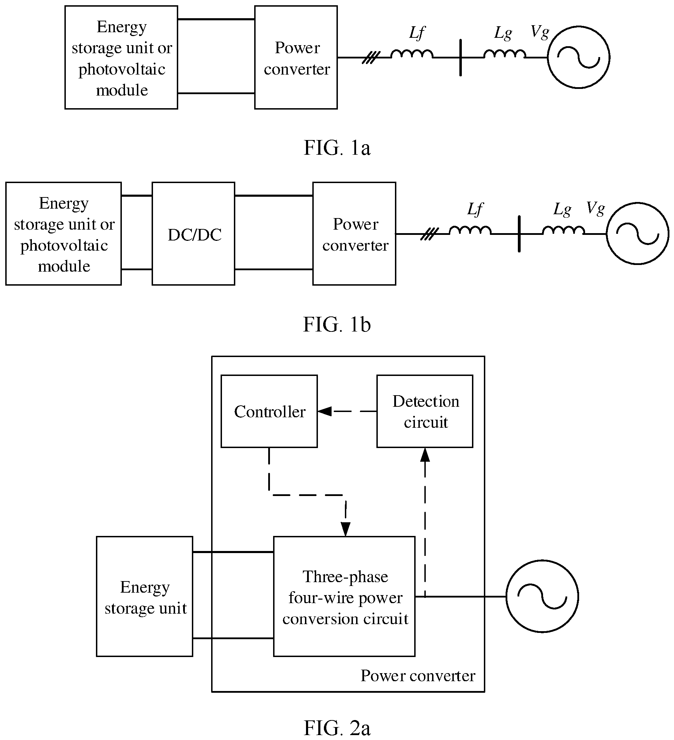

FIG. 1a is an example of a diagram of a structure of a new energy system, and FIG. 1b is an example of a diagram of another structure of the new energy system.

In a specific application scenario, the new energy system may be an energy storage system. Refer to FIG. 1a and FIG. 1b. In this embodiment, the energy storage system mainly includes an energy storage unit and a power converter. In the energy storage system, the power converter may be specifically a PCS. The energy storage unit is connected to the PCS, and the PCS is configured to convert a direct current stored in the energy storage unit into an alternating current, and output the alternating current to a power grid. Refer to FIG. 1a. This application is applicable to a single-stage architecture in which the energy storage unit is directly connected to a direct current side of the PCS. Refer to FIG. 1b. This application is alternatively applicable to a two-stage architecture in which the energy storage unit is connected to the direct current side of the PCS through a direct current converter (DC/DC), that is, the DC/DC may be coupled between the energy storage unit and the PCS.

In another specific application scenario, the new energy system may be a photovoltaic system. Refer to FIG. 1a and FIG. 1b. The photovoltaic system mainly includes a photovoltaic module and a power converter. In the photovoltaic system, the power converter may be specifically a photovoltaic inverter. The photovoltaic module is connected to the photovoltaic inverter, the photovoltaic module may convert light energy into a direct current, and the photovoltaic inverter is configured to convert the direct current output by the photovoltaic module into an alternating current, and output the alternating current to the power grid. Similarly, refer to FIG. 1a. This application is applicable to a single-stage architecture in which a photovoltaic module is directly connected to a direct current side of the photovoltaic inverter. Refer to FIG. 1b. This application is alternatively applicable to a two-stage architecture in which the photovoltaic module is connected to a direct current side of the photovoltaic inverter through a DC/DC, that is, the DC/DC may be coupled between the photovoltaic module and the photovoltaic inverter.

When the foregoing new energy system requires that the power converter has an unbalanced load carrying capability. For example, when the power converter is applied to a scenario without transformer isolation, the power converter may use a three-phase four-wire structure. In comparison with those of a power converter with a three-phase three-wire structure, a control dimension and a degree of freedom of a power converter with a three-phase four-wire structure increase, and a control policy is complex accordingly. Especially, when an asymmetric fault occurs in a power grid connected to the power converter, problems in two aspects are caused: (a) Three phases of currents of the power converter are overcurrent, and a zero-sequence current of a neutral wire (an N wire) is overcurrent. (b) Improper control of the zero-sequence current causes a double-frequency fluctuation of active power, deteriorating a voltage fluctuation of a bus on a direct current side, and causing overvoltage protection of the direct current bus.

In view of this, embodiments of this application provide a power converter, a control method for the power converter, and an energy storage system, to resolve an overcurrent problem of the power converter caused by an asymmetric fault occurring in a power grid. To make the objectives, technical solutions, and advantages of this application clearer, the following further describes this application in detail with reference to the accompanying drawings.

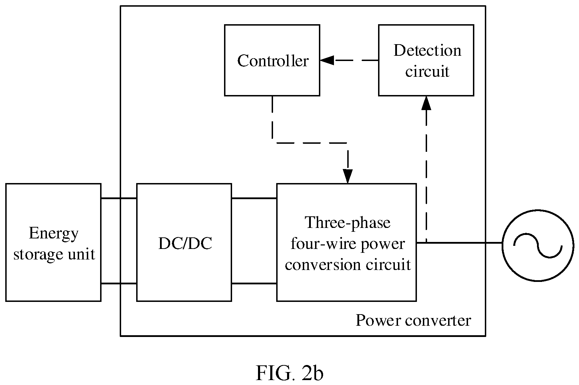

FIG. 2a is an example of a diagram of a structure of an energy storage system according to an embodiment of this application, and FIG. 2b is an example of a diagram of another structure of the energy storage system according to an embodiment of this application.

Refer to FIG. 2a and FIG. 2b. The energy storage system specifically includes an energy storage unit and a power converter. The power converter includes a three-phase four-wire power conversion circuit (which is a power conversion circuit for short below) and a controller. The power converter may further include a detection circuit. Refer to FIG. 2a. The energy storage unit may be directly connected to a direct current side of the power conversion circuit. Refer to FIG. 2b. The energy storage unit may alternatively be connected to a direct current side of the power converter through a DC/DC. The power conversion circuit is configured to convert a direct current stored in the energy storage unit into an alternating current, and output the alternating current to a power grid. The detection circuit is connected to an alternating current side output end of the power conversion circuit, and the detection circuit is configured to detect values of three phases of voltages and values of three phases of currents (or values of four phases of currents) that are output by the power conversion circuit. The controller is connected to the detection circuit, and the controller is configured to determine, based on the values of the three phases of voltages that are output by the power conversion circuit and that are detected by the detection circuit, whether an asymmetric fault occurs in the power grid, where the asymmetric fault specifically includes a single-phase grounding fault, a single-phase short-circuit grounding fault, a two-phase short-circuit grounding fault, and a two-phase short-circuit grounding fault. When the single-phase short-circuit grounding fault occurs, a fault phase of current increases and a fault phase of voltage decreases, and a zero-sequence current and a zero-sequence voltage occur. When the single-phase grounding fault occurs, a fault phase of voltage is zero (which is equal potential with the ground), a fault phase of current is an intermittent arc current, and a value of the current is related to a line parameter. When the other two phases of voltages increase, currents also increase accordingly. When a two-phase short-circuit fault occurs, two short-circuited phases of voltages decrease and two short-circuited phases of currents increase, and there is no zero-sequence current or zero-sequence voltage. When a two-phase short-circuit grounding fault occurs, two short-circuit phases of voltages decrease and two short-circuit phases of currents increase, and a zero-sequence current and a zero-sequence voltage occur. It can be known based on the foregoing output characteristics of the asymmetric fault, after the asymmetric fault occurs, a value of a specific phase of voltage decreases or values of two specific phases of voltages decrease, that is, is/are less than a low voltage threshold. In addition, as the fault phase of voltage decreases, a difference between the fault phase of voltage and a non-fault phase of voltage increases, that is, is greater than a specified threshold. Therefore, whether an asymmetric fault occurs may be determined by determining voltage values of the three phases of voltages. Specifically, the controller may determine, in a manner of determining that a value of any phase of voltage of the three phases of voltages output by the power conversion circuit is less than a low voltage threshold, and determining that a difference between values of any two phases of voltages is greater than a specified threshold, whether the asymmetric fault occurs in the power grid. The power conversion circuit generally includes components: a switching transistor, a diode, an inductor, a capacitor, and the like. A working state of the power conversion circuit may be implemented by adjusting working states of these components (for example, the switching transistor). The controller may send a control signal to a component in the power conversion circuit, and adjust an output characteristic of the power conversion circuit, so that when the asymmetric fault occurs in the power grid, the controller controls, based on voltage amplitudes and current amplitudes of a positive-sequence current, a negative-sequence current, and a zero-sequence current that are output by the three-phase four-wire power conversion circuit, an input voltage fluctuation of the three-phase four-wire power conversion circuit to be mitigated, to mitigate a voltage fluctuation of a direct current bus caused by the asymmetric fault occurring in the power grid.

In this embodiment of this application, the controller may specifically adjust a correlation between a zero-sequence current amplitude of the zero-sequence current output by the three-phase four-wire power conversion circuit and a negative-sequence voltage amplitude of the negative-sequence current output by the three-phase four-wire power conversion circuit and a correlation between the zero-sequence current amplitude and a positive-sequence voltage amplitude of the positive-sequence current; adjust a correlation between a positive-sequence current amplitude and the positive-sequence voltage amplitude of the positive-sequence current and a correlation between the positive-sequence current amplitude and a zero-sequence voltage amplitude of the zero-sequence current; and adjust a correlation between a negative-sequence current amplitude and the negative-sequence voltage amplitude of the negative-sequence current and a negative correlation between the negative-sequence current amplitude and the zero-sequence voltage amplitude, so that the input voltage fluctuation of the three-phase four-wire power conversion circuit is mitigated.

In this embodiment of this application, the controller may adjust the positive-sequence current, the negative-sequence current, and the zero-sequence current that are output by the power conversion circuit, so that the output characteristic of the power conversion circuit tends to be symmetric, and a problem such as overcurrent of the power conversion circuit is avoided. The controller may adjust the positive-sequence current, the negative-sequence current, and the zero-sequence current that are output by the power conversion circuit, so that the output characteristic of the power conversion circuit is restored to a symmetric state, and a high active power output requirement is met. One control manner is: controlling the positive-sequence current amplitude of the positive-sequence current to be in a positive correlation with the positive-sequence voltage amplitude, and the positive-sequence current amplitude to be in a positive correlation with the zero-sequence voltage amplitude; controlling the negative-sequence current amplitude of the negative-sequence current to be in a positive correlation with the negative-sequence voltage amplitude, and the negative-sequence current amplitude to be in a negative correlation with the zero-sequence voltage amplitude; and controlling the zero-sequence current amplitude of the zero-sequence current to be in a positive correlation with the negative-sequence voltage amplitude, and the zero-sequence current amplitude to be in a negative correlation with the positive-sequence voltage amplitude.

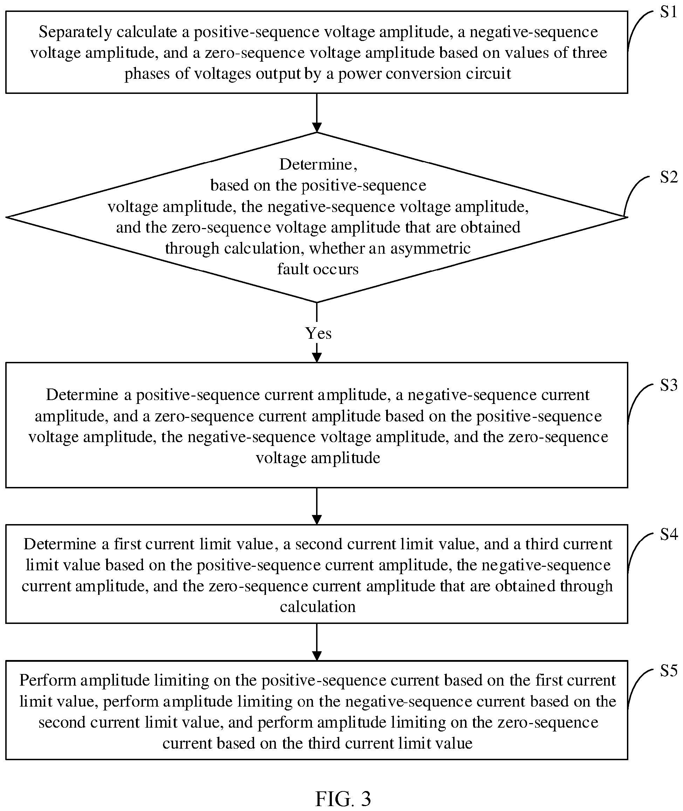

Refer to FIG. 3. In this embodiment of this application, a specific implementation in which a controller controls a positive-sequence current, a negative-sequence current, and a zero-sequence current that are output by a power conversion circuit may include the following steps:

S1: Separately calculate a positive-sequence voltage amplitude, a negative-sequence voltage amplitude, and a zero-sequence voltage amplitude based on values of three phases of voltages output by the power conversion circuit.

S2: Determine, based on the positive-sequence voltage amplitude, the negative-sequence voltage amplitude, and the zero-sequence voltage amplitude that are obtained through calculation, whether the asymmetric fault occurs, where, specifically, when determining that a value of any phase of voltage of the three phases of voltages output by the power conversion circuit is less than a first threshold (where the first threshold may also be referred to as a low voltage threshold), and determining that a difference between values of any two phases of voltage is greater than a second threshold, the controller may determine that an asymmetric fault occurs in a power grid.

S3: When determining that the asymmetric fault occurs, determine a positive -sequence current amplitude of the positive-sequence current, a negative-sequence current amplitude of the negative-sequence current, and a zero-sequence current amplitude of the zero-sequence current based on the positive-sequence voltage amplitude, the negative-sequence voltage amplitude, and the zero-sequence voltage amplitude.

Specifically, the positive-sequence current amplitude may be determined based on a weighted summation value of the positive-sequence voltage amplitude and the zero-sequence voltage amplitude. A first regulation coefficient is a weight of the positive-sequence voltage amplitude during weighted summation, and a value range of the first regulation coefficient is [0, 10]; and a second regulation coefficient is a weight of the zero-sequence voltage amplitude during weighted summation, and a value range of the second regulation coefficient is [0, 10]. Values of the first regulation coefficient and the second regulation coefficient do not affect each other.

For example, the positive-sequence current amplitude $I_{1mag}$ may be obtained through calculation by using Formula 1:

$$I_{1mag} = K_{1Pos} \cdot I_N \cdot V_{1mag} / V_N + K_{2Pos} \cdot I_N \cdot V_{0mag} / V_N \quad \text{(Formula 1)}$$

$I_N$ is a rated current value or a maximum current limit value allowed by hardware of the power conversion circuit. $V_N$ is an alternating current rated voltage value of the power conversion circuit. $V_{1mag}$ is the positive-sequence voltage amplitude. $V_{0mag}$ is the zero-sequence voltage amplitude. $K_{1Pos}$ is the first regulation coefficient for a positive correlation between the positive-sequence current amplitude and the positive-sequence voltage amplitude. The first regulation coefficient may be set to a constant. The first regulation coefficient may also be adaptively adjusted with a change of a power grid condition. A value of the first regulation coefficient is generally: $0 < K_{1Pos} \leq 10$. $K_{2Pos}$ is the second regulation coefficient for a positive correlation between the positive-sequence current amplitude and the zero-sequence voltage amplitude. The second regulation coefficient may be set to a constant. The second regulation coefficient may also be adaptively adjusted with the change of the power grid condition. A value of the second regulation coefficient is generally: $0 < K_{2Pos} \leq 10$.

For example, the first regulation coefficient $K_{1Pos}$ may be adaptively adjusted based on a power grid fault condition, the first regulation coefficient $K_{1Pos}$ is controlled to be in an inverse proportion to a sum of the positive-sequence voltage amplitude $V_{1mag}$ and the negative-sequence voltage amplitude $V_{2mag}$, and the first regulation coefficient $K_{1Pos}$ is controlled to be in an inverse proportion to the zero-sequence current amplitude $I_{0mag}$. For example, the first regulation coefficient $K_{1Pos}$ may be adjusted based on a ratio of a difference between a preset current limit amplitude $I_{max}$ and the zero-sequence current amplitude $I_{0mag}$ and the sum of the positive-sequence voltage amplitude $V_{1mag}$ and the negative-sequence voltage amplitude $V_{2mag}$. For example, the first regulation coefficient $K_{1Pos}$ may be obtained through calculation by using Formula 1-1. Alternatively, for example, the first regulation coefficient $K_{1Pos}$ may be adjusted based on a negative value of a weighted summation value of the sum of the positive-sequence voltage amplitude $V_{1mag}$ and the negative-sequence voltage amplitude $V_{2mag}$ and the zero-sequence current amplitude $I_{0mag}$. For example, the first regulation coefficient $K_{1Pos}$ may be obtained through calculation by using Formula 1-2:

$$\mathrm{K}_{1\mathrm{Pos}}=\mathrm{H}_{10}(I_{\max}-I_{0\mathrm{mag}})/(\mathrm{H}_{11}(V_{1\mathrm{mag}}+V_{2\mathrm{mag}}))\ \text{(Formula 1-1)};$$

and

$$\mathrm{K}_{1\mathrm{Pos}}=-\mathrm{H}_{11}(V_{1\mathrm{mag}}+V_{2\mathrm{mag}})-\mathrm{H}_{10}I_{0\mathrm{mag}}\ \text{(Formula 1-2)}$$

$H_{11}$ is a first weight coefficient, and a value of $H_{11}$ is generally: $0<H_{11}\leq20$. $H_{10}$ is a second weight coefficient, and a value of Hio is generally: $0<H_{10}\leq20$. The values of the first weight coefficient and the second weight coefficient do not affect each other.

For example, the second regulation coefficient $K_{2\mathrm{Pos}}$ may be adaptively adjusted based on a power grid fault condition, the second regulation coefficient $K_{2\mathrm{Pos}}$ is controlled to be in an inverse proportion to a sum of the positive-sequence voltage amplitude $V_{1\mathrm{mag}}$ and the negative-sequence voltage amplitude $V_{2\mathrm{mag}}$, and the second regulation coefficient $K_{2\mathrm{Pos}}$ is controlled to be in a direct proportion to the zero-sequence current amplitude $I_{0\mathrm{mag}}$. For example, the second regulation coefficient $K_{2\mathrm{Pos}}$ may be adjusted based on a ratio of the zero-sequence current amplitude $I_{0\mathrm{mag}}$ to the sum of the positive-sequence voltage amplitude $V_{1\mathrm{mag}}$ and the negative-sequence voltage amplitude $V_{2\mathrm{mag}}$. For example, the second regulation coefficient $K_{2\mathrm{Pos}}$ may be obtained through calculation by using Formula 2-1. Alternatively, for example, the second regulation coefficient $K_{2\mathrm{Pos}}$ may be adjusted based on a weighted difference between the zero-sequence current amplitude $I_{0\mathrm{mag}}$ and the sum of the positive-sequence voltage amplitude $V_{1\mathrm{mag}}$ and the negative-sequence voltage amplitude $V_{2\mathrm{mag}}$. For example, the second regulation coefficient $K_{2\mathrm{Pos}}$ may be obtained through calculation by using Formula 2-2:

$$\mathrm{K}_{2\mathrm{pos}}=\mathrm{H}_{10}I_{0\mathrm{mag}}/(\mathrm{H}_{11}(V_{1\mathrm{mag}}+V_{2\mathrm{mag}}))\ \text{(Formula 2-1)};$$

and

$$\mathrm{K}_{2\mathrm{pos}}=-\mathrm{H}_{11}(V_{1\mathrm{mag}}+V_{2\mathrm{mag}})+\mathrm{H}_{10}I_{0\mathrm{mag}}\ \text{(Formula 2-2)}$$

The adaptive setting of the first regulation coefficient $K_{1\mathrm{Pos}}$ and the second regulation coefficient $K_{2\mathrm{Pos}}$ helps use the zero-sequence current and the negative-sequence current to jointly suppress a double-frequency fluctuation of active power, and improve a positive-sequence voltage support capability.

Specifically, the negative-sequence current amplitude may be controlled based on a weighted difference between the negative-sequence voltage amplitude and the zero-sequence voltage amplitude. A third regulation coefficient is a weight of the negative-sequence voltage amplitude during weighted difference calculation, and a value range of the third regulation coefficient is [0, 10]; and a fourth regulation coefficient is a weight of the zero-sequence voltage amplitude during weighted difference calculation, and a value range of the fourth regulation coefficient is [0, 10]. Values of the third regulation coefficient and the fourth regulation coefficient do not affect each other.

For example, the negative-sequence current amplitude $I_{2\mathrm{mag}}$ may be obtained through calculation by using Formula 2:

$$I_{2mag}=\mathrm{K}_{1\mathrm{Neg}}\cdot\mathrm{I}_{N}\cdot V_{2mag}\big/V_{N}-\mathrm{K}_{2\mathrm{Neg}}\cdot\mathrm{I}_{N}\cdot V_{0mag}\big/V_{N}\quad\text{(Formula 2)}$$

$I_N$ is a rated current value or a maximum current limit value allowed by hardware of the power conversion circuit. $V_N$ is an alternating current rated voltage value of the power conversion circuit. $V_{2\mathrm{mag}}$ is the negative-sequence voltage amplitude. $V_{0\mathrm{mag}}$ is the zero-sequence voltage amplitude. $K_{1\mathrm{Neg}}$ is the third regulation coefficient for a positive correlation between the negative-sequence current amplitude and the negative-sequence voltage amplitude. The third regulation coefficient may be set to a constant. The third regulation coefficient may also be adaptively adjusted with a change of a power grid condition. A value of the third regulation coefficient is generally: $0<K_{1\mathrm{Neg}}\leq10$. $K_{2\mathrm{Neg}}$ is the fourth regulation coefficient for a negative correlation between the negative-sequence current amplitude and the zero-sequence voltage amplitude. The fourth regulation coefficient may be set to a constant. The fourth regulation coefficient may also be adaptively adjusted with the change of the power grid condition. A value of the fourth regulation coefficient is generally: $0<K_{2\mathrm{Neg}}\leq10$.

For example, the third regulation coefficient $K_{1\mathrm{Neg}}$ may be adaptively adjusted based on a power grid fault condition, the third regulation coefficient $K_{1\mathrm{Neg}}$ is controlled to be in an inverse proportion to a sum of the positive-sequence voltage amplitude $V_{1\mathrm{mag}}$ and the negative-sequence voltage amplitude $V_{2\mathrm{mag}}$, and the third regulation coefficient $K_{1\mathrm{Neg}}$ is controlled to be in an inverse proportion to the zero-sequence current amplitude $I_{0\mathrm{mag}}$. For example, the third regulation coefficient $K_{1\mathrm{Neg}}$ may be adjusted based on a ratio of a difference between a preset current limit amplitude $I_{\max}$ and the

zero-sequence current amplitude $I_{0mag}$ and the sum of the positive-sequence voltage amplitude $V_{1mag}$ and the negative-sequence voltage amplitude $V_{2mag}$. For example, the third regulation coefficient $K_{1Neg}$ may be obtained through calculation by using Formula 3-1. Alternatively, for example, the third regulation coefficient $K_{1Neg}$ may be adjusted based on a negative value of a weighted summation value of the sum of the positive-sequence voltage amplitude $V_{1mag}$ and the negative-sequence voltage amplitude $V_{2mag}$ and the zero-sequence current amplitude $I_{0mag}$. For example, the third regulation coefficient $K_{1Neg}$ may be obtained through calculation by using Formula 3-2:

$$K_{1Neg}=H_{20}(I_{max}-I_{0mag})/(H_{21}(V_{1mag}+V_{2mag})) \text{ (Formula 3-1);}$$

and

$$K_{1Neg}=-H_{21}(V_{1mag}+V_{2mag})-H_{20}I_{0mag} \text{ (Formula 3-2)}$$

$H_{21}$ is a third weight coefficient, and a value of $H_{21}$ is generally: $0<H_{21}\leq20$. $H_{20}$ is a fourth weight coefficient, and a value of $H_{20}$ is generally: $0<H_{20}\leq20$. The values of the third weight coefficient and the fourth weight coefficient do not affect each other.

For example, the fourth regulation coefficient $K_{2Neg}$ may be adaptively adjusted based on a power grid fault condition, the fourth regulation coefficient $K_{2Neg}$ is controlled to be in an inverse proportion to a sum of the positive-sequence voltage amplitude $V_{1mag}$ and the negative-sequence voltage amplitude $V_{2mag}$, and the fourth regulation coefficient $K_{2Neg}$ is controlled to be in a direct proportion to the zero-sequence current amplitude $I_{0mag}$. For example, the fourth regulation coefficient $K_{2Neg}$ may be adjusted based on a ratio of a negative value of the zero-sequence current amplitude $I_{0mag}$ to the sum of the positive-sequence voltage amplitude $V_{1mag}$ and the negative-sequence voltage amplitude $V_{2mag}$. For example, the fourth regulation coefficient $K_{2Neg}$ may be obtained through calculation by using Formula 4-1. Alternatively, for example, the fourth regulation coefficient $K_{2Neg}$ may be adjusted based on a negative value of a weighted summation value of the zero-sequence current amplitude $I_{0mag}$ and the sum of the positive-sequence voltage amplitude $V_{1mag}$ and the negative-sequence voltage amplitude $V_{2mag}$. For example, the fourth regulation coefficient $K_{2Neg}$ may be obtained through calculation by using Formula 4-2:

$$K_{2Neg}=-H_{20}I_{0mag}/(H_{21}(V_{1mag}+V_{2mag})) \text{ (Formula 4-1);}$$

and

$$K_{2Neg}=-H_{21}(V_{1mag}+V_{2mag})-H_{20}I_{0mag} \text{ (Formula 4-2)}$$

The adaptive setting of the third regulation coefficient $K_{1Neg}$ and the fourth regulation coefficient $K_{2Neg}$ helps use the zero-sequence current and the negative-sequence current to jointly suppress a double-frequency fluctuation of active power, and improve a positive-sequence voltage support capability.

Specifically, the negative-sequence current amplitude may be controlled based on a smaller value in a weighted difference between the negative-sequence voltage amplitude and the positive-sequence voltage amplitude and a maximum zero-sequence current limit value allowed to flow through an N wire of a power converter. A fifth regulation coefficient is a weight of the negative-sequence voltage amplitude during weighted difference calculation, and a value range of the fifth regulation coefficient is [0, 10]; and a sixth regulation coefficient is a weight of the positive-sequence voltage amplitude during weighted difference calculation, and a value range of the sixth regulation coefficient is [0, 10]. Values of the fifth regulation coefficient and the sixth regulation coefficient do not affect each other.

For example, the zero-sequence current amplitude $I_{0mag}$ may be obtained through calculation by using Formula 3:

$$I_{0mag}=\min\left\{\left(K_{1Zero}\cdot I_N \cdot V_{2mag}/V_N - K_{2Zero}\cdot I_N \cdot V_{1mag}/V_N\right), I_{0nline}\right\} \text{ (Formula 3)}$$

$I_N$ is a rated current value or a maximum current limit value allowed by hardware of the power conversion circuit. $V_N$ is an alternating current rated voltage value of the power conversion circuit. $V_{2mag}$ is the negative-sequence voltage amplitude. $V_{1mag}$ is the positive-sequence voltage amplitude. $K_{1Zero}$ is the fifth regulation coefficient for a positive correlation between the zero-sequence current amplitude and the negative-sequence voltage amplitude. The fifth regulation coefficient may be set to a constant. The fifth regulation coefficient may also be adaptively adjusted with a change of a power grid condition. A value of the fifth regulation coefficient is generally: $0\leq K_{1Zero}\leq10$. $K_{2Zero}$ is the sixth regulation coefficient for a negative correlation between the zero-sequence current amplitude and the positive-sequence voltage amplitude. The sixth regulation coefficient may be set to a constant. The sixth regulation coefficient may also be adaptively adjusted with the change of the power grid condition. A value of the sixth regulation coefficient is generally: $0 \leq K_{2Zero} \leq 10$. $I_{0nline}$ is a zero-sequence rated current value or a maximum zero-sequence current limit value allowed to flow through an N wire of the power conversion circuit.

For example, the fifth regulation coefficient $K_{1Zero}$ may be adaptively adjusted based on a power grid fault condition, the fifth regulation coefficient $K_{1Zero}$ is controlled to be in an inverse proportion to the zero-sequence voltage amplitude $V_{0mag}$, and the fifth regulation coefficient $K_{1Zero}$ is controlled to be in a direct proportion to the positive-sequence current amplitude $I_{1mag}$. For example, the fifth regulation coefficient $K_{1Zero}$ may be adjusted based on a ratio of the positive-sequence current amplitude $I_{1mag}$ to the zero-sequence voltage amplitude $V_{0mag}$. For example, the fifth regulation coefficient $K_{1Zero}$ may be obtained through calculation by using Formula 5-1. Alternatively, for example, the fifth regulation coefficient $K_{1Zero}$ may be adjusted based on a weighted difference between the positive-sequence current amplitude $I_{1mag}$ and the zero-sequence voltage amplitude $V_{0mag}$. For example, the fifth regulation coefficient $K_{1Zero}$ may be obtained through calculation by using Formula 5-2:

$$K_{1Zero} = H_{30}I_{1mag}/(H_{31}V_{0mag}) \text{ (Formula 5-1);}$$

and

$$K_{1Zero} = -H_{31}V_{0mag} + H_{30}I_{1mag} \text{ (Formula 5-2)}$$

$H_{31}$ is a fifth weight coefficient, and a value of $H_{31}$ is generally: $0 < H_{31} \leq 20$. $H_{30}$ is a sixth weight coefficient, and a value of $H_{30}$ is generally: $0 < H_{30} \leq 20$. The values of the fifth weight coefficient and the sixth weight coefficient do not affect each other.

For example, the sixth regulation coefficient $K_{2Zero}$ may be adaptively adjusted based on a power grid fault condition, the sixth regulation coefficient $K_{2Zero}$ is controlled to be in an inverse proportion to the zero-sequence voltage amplitude $V_{0mag}$, and the sixth regulation coefficient $K_{2Zero}$ is controlled to be in a direct proportion to a negative-sequence current amplitude $I_{2mag}$. For example, the sixth regulation coefficient $K_{2Zero}$ may be adjusted based on a ratio of a negative value of the negative-sequence current amplitude $I_{2mag}$ to the zero-sequence voltage amplitude $V_{0mag}$. For example, the sixth regulation coefficient $K_{2Zero}$ may be obtained through calculation by using Formula 6-1. Alternatively, for example, the sixth regulation coefficient $K_{2Zero}$ may be adjusted based on a negative value of a weighted summation value of the positive-sequence current amplitude $I_{1mag}$ and the zero-sequence voltage amplitude $V_{0mag}$. For example, the sixth regulation coefficient $K_{2Zero}$ may be obtained through calculation by using Formula 6-2:

$$K_{1Zero} = -H_{30}I_{1mag}/(H_{31}V_{0mag}) \text{ (Formula 6-1);}$$

and

$$K_{1Zero} = -H_{31}V_{0mag} - H_{30}I_{1mag} \text{ (Formula 6-2)}$$

The adaptive setting of the fifth regulation coefficient $K_{1Zero}$ and the sixth regulation coefficient $K_{2Zero}$ helps use the zero-sequence current and the negative-sequence current to jointly suppress a double-frequency fluctuation of active power, and improve a positive-sequence voltage support capability.

For example, when the zero-sequence current amplitude is controlled to be 0, that is, a current value of the N wire is controlled to be 0, the power conversion circuit may be changed to be controlled based on the positive-sequence current and the negative-sequence current.

S4: Determine a first current limit value, a second current limit value, and a third current limit value based on the positive-sequence current amplitude, the negative-sequence current amplitude, and the zero-sequence current amplitude that are obtained through calculation.

For example, first, a sum of the positive-sequence current amplitude $I_{1mag}$, the negative-sequence current amplitude $I_{2mag}$, and the zero-sequence current amplitude $I_{0mag}$ that are obtained through calculation may be set to a total current amplitude $I_{sum}$ by using Formula 4:

$$I_{sum} = I_{1mag} + I_{2mag} + I_{0mag} \quad \text{(Formula 4)}$$

Then, it is determined whether the total current amplitude $I_{sum}$ is less than or equal to the preset current limit amplitude $I_{max}$. The preset current limit amplitude $I_{max}$ is to ensure that an actual peak of any phase of current of three phases (ABC) of currents of the power conversion circuit does not exceed a maximum preset phase of current $I_{pmax}$

allowed by the hardware.

If the total current amplitude $I_{sum}$ is less than or equal to the preset current limit amplitude $I_{max}$, the first current limit value $I_1$ is equal to the positive-sequence current amplitude $I_{1mag}$, and otherwise, the first current limit value $I_1$ is obtained based on a product of a ratio of the preset current limit amplitude $I_{max}$ to the total current amplitude $I_{sum}$ and the positive-sequence current amplitude $I_{1mag}$. In conclusion, the first current limit value $I_1$ is less than or equal to the positive-sequence current amplitude $I_{1mag}$. Specifically, the first current limit value $I_1$ may be obtained through calculation by using Formula 5:

$$I_1 = \begin{cases} I_{1mag}, & (I_{sum} \leq I_{max}) \\ \dfrac{I_{1mag}}{I_{sum}} I_{max}, & (I_{sum} > I_{max}) \end{cases} \quad \text{(Formula 5)}$$

If the total current amplitude $I_{sum}$ is less than or equal to the preset current limit amplitude $I_{max}$, the second current limit value $I_2$ is equal to the negative-sequence current amplitude $I_{2mag}$; and otherwise, the second current limit value $I_2$ is obtained based on a product of a ratio of the preset current limit amplitude $I_{max}$ to the total current amplitude $I_{sum}$ and the negative-sequence current amplitude $I_{2mag}$. In conclusion, the second current limit value $I_2$ is less than or equal to the negative-sequence current amplitude $I_{2mag}$. Specifically, the second current limit value $I_2$ may be obtained through calculation by using Formula 6:

$$I_2 = \begin{cases} I_{2mag}, & (I_{sum} \leq I_{max}) \\ \dfrac{I_{2mag}}{I_{sum}} I_{max}, & (I_{sum} > I_{max}) \end{cases} \quad \text{(Formula 6)}$$

If the total current amplitude $I_{sum}$ is less than or equal to the preset current limit amplitude $I_{max}$, the third current limit value $I_3$ is equal to the zero-sequence current amplitude $I_{0mag}$; and otherwise, the third current limit value $I_3$ is obtained based on a product of a ratio of the preset current limit amplitude $I_{max}$ to the total current amplitude $I_{sum}$ and the zero-sequence current amplitude $I_{0mag}$. In conclusion, the third current limit value $I_3$ is less than or equal to the zero-sequence current amplitude $I_{0mag}$. Specifically, the third current limit value $I_3$ may be obtained through calculation by using Formula 7:

$$I_3 = \begin{cases} I_{0mag}, & (I_{sum} \leq I_{max}) \\ \dfrac{I_{0mag}}{I_{sum}} I_{max}, & (I_{sum} > I_{max}) \end{cases} \quad \text{(Formula 7)}$$

S5: Perform amplitude limiting on the positive-sequence current based on the first current limit value, perform amplitude limiting on the negative-sequence current based on the second current limit value, and perform amplitude limiting on the zero-sequence current based on the third current limit value. In this way, any phase of current of the three phases of currents of the power conversion circuit does not exceed the preset phase of current $I_{pmax}$, and a zero-sequence current of the N wire does not exceed an allowed zero-sequence rated current or an allowed maximum current limit value $I_{0nline}$.

Specifically, when the total current amplitude $I_{sum}$ is less than or equal to the preset current limit amplitude $I_{max}$, because the first current limit value $I_1$ is equal to the positive-sequence current amplitude $I_{1mag}$, the second current limit value $I_2$ is equal to the negative-sequence current amplitude $I_{2mag}$, and the third current limit value $I_3$ is equal to the zero-sequence current amplitude $I_{0mag}$, the positive-sequence current, the negative-sequence current, and the zero-sequence current already meet the limiting condition, and amplitudes of the positive-sequence current, the negative-sequence current, and the zero-sequence current do not need to be adjusted. When the total current amplitude $I_{sum}$ is greater than the preset current limit amplitude $I_{max}$, because the first current limit value $I_1$ is less than the positive-sequence current amplitude $I_{1mag}$ before adjustment, the second current limit value $I_2$ is less than the negative-sequence current amplitude $I_{2mag}$ before adjustment, and the third current limit value $I_3$ is less than the zero-sequence current amplitude $I_{0mag}$ before adjustment, the positive-sequence current amplitude $I_{1mag}$ may be adjusted to be not greater than the first current limit value $I_1$ by controlling a positive-sequence current instruction value $I^*_{m1}$ of the positive-sequence current to be less than or equal to the first current limit value $I_1$, that is, in a manner of $I^*_{m1} \leq I1$; the negative-sequence current amplitude $I_{2mag}$ may be adjusted to be not greater than the second current limit value $I_2$ by controlling a negative-sequence current instruction value $I^*_{m2}$ of the negative-sequence current to be less than or equal to the second current limit value $I_2$, that is, in a manner of $I^*_{m2} \leq I2$; and the zero-sequence current amplitude $I_{0mag}$ is adjusted to be not greater than the third current limit value $I_3$ by controlling a zero-sequence current instruction value $I^*_{m0}$ of the zero-sequence current to be less than or equal to the third current limit value $I_3$, that is, in a manner of $I^*_{m0} \leq I3$.

Specifically, the positive-sequence current instruction value $I^*_{m1}$ is in a positive correlation with a positive-sequence active current value, the positive-sequence current instruction value $I^*_{m1}$ is in a positive correlation with a positive-sequence reactive current value, and the positive-sequence current instruction value $I^*_{m1}$ may be determined based on a square root value of a sum of a square value of a positive-sequence active current instruction value and a square value of a positive-sequence reactive current instruction value. For example, the positive-sequence current instruction value $I^*_{m1}$ may be obtained through calculation by using Formula 8:

$$\mathrm{I}^*_{m1} = \sqrt{\left(I^*_{p1}\right)^2 + \left(I^*_{q1}\right)^2} \quad \text{(Formula 8)}$$

$I^*_{p1}$ is the positive-sequence active current instruction value, and $I^*_{q1}$ is the positive-sequence reactive current instruction value.

Specifically, the negative-sequence current instruction value $I^*_{m2}$ is in a positive correlation with a negative-sequence active current value, the negative-sequence current instruction value $I^*_{m2}$ is in a positive correlation with a negative-sequence reactive current value, and the negative-sequence current instruction value $I^*_{m2}$ may be determined based on a square root value of a sum of a square value of a negative-sequence active current instruction value and a square value of a negative-sequence reactive current instruction value. For example, the negative-sequence current instruction amplitude $I^*_{m2}$ may be obtained through calculation by using Formula 9:

$$\mathrm{I}^*_{m2} = \sqrt{\left(I^*_{p2}\right)^2 + \left(I^*_{q2}\right)^2} \quad \text{(Formula 9)}$$

$I^*_{p2}$ is the negative-sequence active current instruction value, and $I^*_{q2}$ is the negative-sequence reactive current instruction value.

Specifically, the zero-sequence current instruction value $I^*_{m0}$ is in a positive correlation with a zero-sequence current real component, the zero-sequence current instruction value $I^*_{mo}$ is in a positive correlation with a zero-sequence current imaginary component, and the zero-sequence current instruction value $I^*_{mo}$ may be determined based on a square root value of a sum of a square value of the zero-sequence current real component and a square value of the zero-sequence current imaginary component. For example, the zero-sequence current instruction amplitude $I^*_{mo}$ may be obtained through calculation by using Formula 10:

$$\mathrm{I}^*_{m0} = \sqrt{\left(I^*_{\mathrm{Re}0}\right)^2 + \left(I^*_{Im0}\right)^2} \quad \text{(Formula 10)}$$

$I^*_{Re0}$ is the zero-sequence current real component, and $I^*_{Im0}$ is the zero-sequence current imaginary component.

In this embodiment of this application, when the positive-sequence current instruction value, the negative-sequence current instruction value, and the zero-sequence current instruction value are generated, and when the total current amplitude $I_{sum}$ is greater than the preset current limit amplitude $I_{max}$, amplitude limiting may be performed on the positive-sequence current instruction value based on the first current limit value, amplitude limiting may be performed on the negative-sequence current instruction value based on the second current limit value, and amplitude limiting may be performed on the zero-sequence current instruction value based on the third current limit value. Therefore, the amplitude-limited positive-sequence current does not exceed the first current limit value, the amplitude-limited negative-sequence current does not exceed the second current limit value, and the amplitude-limited zero-sequence current does not exceed the third current limit value, to avoid a current overcurrent problem of the power conversion circuit caused when the asymmetric fault occurs in the power grid.

In this embodiment of this application, to meet requirements of currents during different standard faults, implementations of obtaining the positive-sequence active current instruction value and the positive-sequence reactive current instruction value, implementations of obtaining the negative-sequence active current instruction value and the negative-sequence reactive current instruction value, and implementations of obtaining the zero-sequence current real component and the zero-sequence current imaginary component in Formula 8 to Formula 10 above are not limited, and may be set based on different grid-connected standards requirements, for example, may be reactive current priority implementations, or may be active current priority implementations.

In this embodiment of this application, to improve a power grid voltage support capability and suppress a double-frequency fluctuation of active power, the positive-sequence active current instruction value, the positive-sequence reactive current instruction value, the negative-sequence active current instruction value, the negative-sequence reactive current instruction value, the zero-sequence current real component, and the zero-sequence current imaginary component may be determined based on the following principles.

Specifically, the positive-sequence active current instruction value and the positive-sequence reactive current instruction value may be obtained based on a priority principle of the positive-sequence voltage support capability.

For example, the positive-sequence reactive current instruction value $I^*_{q1}$ may be determined based on a positive-sequence voltage dip depth. For example, the positive-sequence reactive current instruction value $I^*_{q1}$ is obtained through calculation by using Formula 11:

$$I^*_{q1} = I_{q0} + K_{1q} \cdot I_N \cdot \left( V_{TR} - V_{1mag} \right) \Big/ V_N \quad \text{(Formula 11)}$$

$I_{q0}$ is the positive-sequence reactive current instruction value before an asymmetric fault occurs. $I_N$ is the rated current value or the maximum current limit value allowed by the hardware of the power conversion circuit. $V_N$ is the alternating current rated voltage value of the power conversion circuit. $K_{1q}$ is a preset regulation coefficient of the positive-sequence reactive current, and a value of $K_{1q}$ is generally: $0 < K_{1q} \leq 10$. $V_{TR}$ is the preset regulation voltage amplitude, and the preset regulation voltage amplitude may be a rated voltage or a preset trigger low-threshold voltage. $V_{1mag}$ is the positive-sequence voltage amplitude. The positive-sequence voltage dip depth is a difference between the preset regulation voltage amplitude and the positive-sequence voltage amplitude, that is, $V_{TR}\text{-}V_{1mag}$.

For example, the positive-sequence active current instruction value $I^*_{p1}$ may be determined based on the first current limit value $I_1$ and the positive-sequence reactive current instruction value $I^*_{q1}$. For example, the positive-sequence active current instruction value $I^*_{p1}$ may be determined based on the square root value of the difference between the square value of the first current limit value $I_1$ and the square value of the positive-sequence reactive current instruction value $I^*_{q1}$. For example, the positive-sequence active current instruction value $I^*_{p1}$ is obtained through calculation by using Formula 12:

$$I^*_{p1} = \sqrt{\left( I_1 \right)^2 - \left( I^*_{q1} \right)^2} \quad \text{(Formula 12)}$$

After the positive-sequence active current instruction value and the positive-sequence reactive current instruction value are obtained in the foregoing manner, the positive-sequence active current value and the positive-sequence reactive current value of the positive-sequence current after adjustment may be controlled to meet the following: the positive-sequence reactive current value is in a positive correlation with the positive-sequence voltage dip depth, and the positive-sequence voltage dip depth is a difference between the preset regulation voltage amplitude and the positive-sequence voltage amplitude; and the positive-sequence active current value is a principal square root of a difference between the first current limit value and a square of the positive-sequence reactive current value.

Specifically, the negative-sequence active current instruction value and the negative-sequence reactive current instruction value may be obtained based on a principle of improving voltage asymmetry and suppressing the double-frequency fluctuation of the active power.

For example, the negative-sequence active current instruction value $I^*_{p2}$ and the negative-sequence reactive current instruction value $I^*_{q2}$ may be determined based on a negative-sequence voltage d-axis component and a negative-sequence voltage q-axis component. For example, the negative-sequence active current instruction value $I^*_{p2}$ and the negative-sequence reactive current instruction value $I^*_{q2}$ may be determined based on a weighted summation value of the negative-sequence voltage d-axis component and the negative-sequence voltage q-axis component. For example, the negative-sequence active current instruction value $I^*_{p2}$ and the negative-sequence reactive current instruction value $I^*_{q2}$ are obtained through calculation by using Formula 13:

$$\begin{cases} I^*_{p2} = K_{2p1} \cdot I_N \cdot V_{2d} \big/ V_N + K_{2p2} \cdot I_N \cdot V_{2q} \big/ V_N \\ I^*_{q2} = K_{2q1} \cdot I_N \cdot V_{2d} \big/ V_N + K_{2q2} \cdot I_N \cdot V_{2q} \big/ V_N \end{cases} \quad \text{(Formula 13)}$$

$I_N$ is the rated current value or the maximum current limit value allowed by the hardware of the power conversion circuit. $V_N$ is the alternating current rated voltage value of the power conversion circuit. $K_{2p1}$ and $K_{2p2}$ are both preset regulation coefficients of the negative-sequence active current, and values of $K_{2p1}$ and $K_{2p2}$ are generally: $-10 \leq K_{2p1} \leq 10$ and $-10 \leq K_{2p2} \leq 10$. $K_{2q1}$ and $K_{2q2}$ are both preset regulation coefficients of the negative-sequence reactive current, and values of $K_{2q1}$ and $K_{2q2}$ are generally: $-10 \leq K_{2q1} \leq 10$ and $-10 \leq K_{2q2} \leq 10$. $V_{2d}$ is the negative-sequence voltage d-axis component. $V_{2q}$ is the negative-sequence voltage q-axis component.

After the negative-sequence active current instruction value and the negative-sequence reactive current instruction value are obtained in the foregoing manner, the negative-sequence active current value and the negative-sequence reactive current value of the negative-sequence current after adjustment may be controlled to meet the following: the negative-sequence active current value is a weighted summation value of the negative-sequence voltage d-axis component and the negative-sequence voltage q-axis component, a value range of a weight of the negative-sequence voltage d-axis component during weighted summation is [-10, 10], and a value range of a weight of the negative-sequence voltage q-axis component during weighted summation is [-10, 10]; and the negative-sequence reactive current value is a weighted summation value of the negative-sequence voltage d-axis component and the negative-sequence voltage q-axis component, a value range of a weight of the negative-sequence voltage d-axis component during weighted summation is [-10, 10], and a value range of a weight of the negative-sequence voltage q-axis component during weighted summation is [-10, 10].

Specifically, the zero-sequence current real component and the zero-sequence current imaginary component may be obtained based on a principle of suppressing the double-frequency fluctuation of the active power.

For example, the zero-sequence current real component $I^*_{Re0}$ and the zero-sequence current imaginary component $I^*_{Im0}$ may be determined based on a zero-sequence voltage real component and a zero-sequence voltage imaginary component. For example, the zero-sequence current real component $I^*_{Re0}$ and the zero-sequence current imaginary component $I^*_{Im0}$ may be determined based on a weighted summation value of the zero-sequence voltage real component and the zero-sequence voltage imaginary component. For example, the zero-sequence current real component $I^*_{Re0}$ and the zero-sequence current imaginary component $I^*_{Im0}$ are obtained through calculation by using Formula 14:

$$\begin{cases} I^*_{Re0} = K_{0Re1} \cdot I_N \cdot V_{0Re}/V_N + K_{0Re2} \cdot I_N \cdot V_{0Im}/V_N \\ I^*_{Im0} = K_{0Im1} \cdot I_N \cdot V_{0Re}/V_N + K_{0Im2} \cdot I_N \cdot V_{0Im}/V_N \end{cases} \quad \text{(Formula 14)}$$

$I_N$ is the rated current value or the maximum current limit value allowed by the hardware of the power conversion circuit. $V_N$ is the alternating current rated voltage value of the power conversion circuit. $K_{0Re1}$ and $K_{0Re2}$ are both preset regulation coefficients of the zero-sequence current real component, and values of $K_{0Re1}$ and $K_{0Re2}$ are generally: $-10 \leq K_{0Re1} \leq 10$ and $-10 \leq K_{0Re2} \leq 10$. $K_{0Im1}$ and $K_{0Im2}$ are both preset regulation coefficients of the zero-sequence current imaginary component, and values of $K_{0Im1}$ and $K_{0Im2}$ are generally: $-10 \leq K_{0Im1} \leq 10$ and $-10 \leq K_{0Im2} \leq 10$. $V_{0Re}$ is the zero-sequence voltage real component. $V_{0Im}$ is the zero-sequence voltage imaginary component.

After the zero-sequence current real component and the zero-sequence current imaginary component are obtained in the foregoing manner, the zero-sequence current real component and the zero-sequence current imaginary component of the zero-sequence current after adjustment may be controlled to meet the following: the zero-sequence current real component is a weighted summation value of the zero-sequence voltage real component and the zero-sequence voltage imaginary component, a value range of a weight of the zero-sequence voltage real component during weighted summation is [-10, 10], and a value range of a weight of the zero-sequence voltage imaginary component during weighted summation is [-10, 10]; and the zero-sequence current imaginary component is a weighted summation value of the zero-sequence voltage real component and the zero-sequence voltage imaginary component, a value range of a weight of the zero-sequence voltage real component during weighted summation is [-10, 10], and a value range of a weight of the zero-sequence voltage imaginary component during weighted summation is [-10, 10].

According to the foregoing embodiments of the energy storage system and the power converter, an embodiment of this application further provides a control method for a power converter. The power converter includes a three-phase four-wire power conversion circuit and a controller. The control method may be performed by the controller in the power converter.

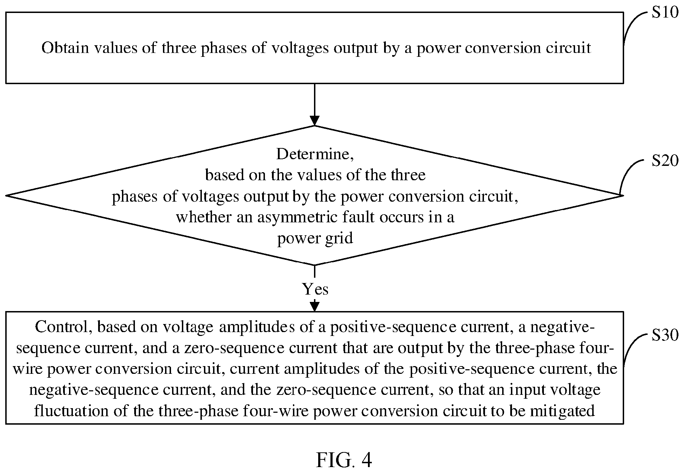

Refer to FIG. 4. The control method provided in this embodiment of this application specifically includes the following steps.

S10: Obtain values of three phases of voltages output by a power conversion circuit, where, specifically, a detection circuit may be used to perform a detection function to obtain the values of the three phases of voltages.

S20: Determine, based on the values of the three phases of voltages output by the power conversion circuit, whether an asymmetric fault occurs in a power grid, where, specifically, when determining that a value of any phase of voltage of the values of the three phases of voltages is less than a first threshold, and a difference between values of any two phases of voltages is greater than a second threshold, determine that the asymmetric fault occurs in the power grid.

S30: When the asymmetric fault occurs in the power grid, control, based on voltage amplitudes and current amplitudes of a positive-sequence current, a negative-sequence current, and a zero-sequence current that are output by the three-phase four-wire power conversion circuit, an input voltage fluctuation of the three-phase four-wire power conversion circuit to be mitigated, to mitigate a voltage fluctuation of a direct current bus caused by the asymmetric fault occurring in the power grid.

In this embodiment of this application, specifically, a correlation between a zero-sequence current amplitude of the zero-sequence current output by the three-phase four-wire power conversion circuit and a negative-sequence voltage amplitude of the negative-sequence current output by the three-phase four-wire power conversion circuit and a correlation between the zero-sequence current amplitude and a positive-sequence voltage amplitude of the positive-sequence current may be adjusted; a correlation between a positive-sequence current amplitude and the positive-sequence voltage amplitude of the positive-sequence current and a correlation between the positive-sequence current amplitude and a zero-sequence voltage amplitude of the zero-sequence current may be adjusted; and a correlation between a negative-sequence current amplitude and the negative-sequence voltage amplitude of the negative-sequence current and a negative correlation between the negative-sequence current amplitude and the zero-sequence voltage amplitude may be adjusted, so that the input voltage fluctuation of the three-phase four-wire power conversion circuit is mitigated.

In this embodiment of this application, the zero-sequence current amplitude of the zero-sequence current may be controlled to be in a positive correlation with the negative-sequence voltage amplitude of the three phases of voltages, and the zero-sequence current amplitude may be controlled to be in a negative correlation with the positive-sequence voltage amplitude of the three phases of voltages; the positive-sequence current amplitude of the positive-sequence current is controlled to be in a positive correlation with the positive-sequence voltage amplitudes, and the positive-sequence current amplitude is controlled to be in a positive correlation with the zero-sequence voltage amplitude of the three phases of voltages; and the negative-sequence current amplitude of the negative-sequence current is controlled to be in a positive correlation with the negative-sequence voltage amplitude, and the negative-sequence current amplitude is controlled to be in a negative correlation with the zero-sequence voltage amplitude, so that an output characteristic of the power conversion circuit is restored to a symmetric state, and a high active power output requirement is met.

In some embodiments of this application, the positive-sequence current amplitude may be controlled based on a weighted summation value of the positive-sequence voltage amplitude and the zero-sequence voltage amplitude, the negative-sequence current amplitude may be controlled based on a weighted difference between the negative-sequence voltage amplitude and the zero-sequence voltage amplitude, and the negative-sequence current amplitude may be controlled based on a smaller value in a weighted difference between the negative-sequence voltage amplitude and the positive-sequence voltage amplitude and a maximum zero-sequence current limit value allowed to flow through an N wire of the three-phase four-wire converter. A first regulation coefficient is a weight of the positive-sequence voltage amplitude during weighted summation, and a value range of the first regulation coefficient is [0, 10]; and a second regulation coefficient is a weight of the zero-sequence voltage amplitude during weighted summation, and a value range of the second regulation coefficient is [0, 10]. For example, the positive-sequence current amplitude may be obtained through calculation by using Formula 1 above. A third regulation coefficient is a weight of the negative-sequence voltage amplitude during weighted difference calculation, and a value range of the third regulation coefficient is [0, 10]; and a fourth regulation coefficient is a weight of the zero-sequence voltage amplitude during weighted difference calculation, and a value range of the fourth regulation coefficient is [0, 10]. For example, the negative-sequence current amplitude may be obtained through calculation by using Formula 2 above. A fifth regulation coefficient is a weight of the negative-sequence voltage amplitude during weighted difference calculation, and a value range of the fifth regulation coefficient is [0, 10]; and a sixth regulation coefficient is a weight of the positive-sequence voltage amplitude during weighted difference calculation, and a value range of the sixth regulation coefficient is [0, 10]. For example, the zero-sequence current amplitude may be obtained through calculation by using Formula 3 above.

In some embodiments of this application, the first regulation coefficient for the positive correlation between the positive-sequence current amplitude and the positive-sequence voltage amplitude may be further adaptively adjusted, so that the first regulation coefficient is in an inverse proportion to a sum of the positive-sequence voltage amplitude and the negative-sequence voltage amplitude, and the first regulation coefficient is in an inverse proportion to the zero-sequence current amplitude; and the second regulation coefficient for the positive correlation between the positive-sequence current amplitude and the zero-sequence voltage amplitude is adaptively adjusted, so that the second regulation coefficient is in an inverse proportion to a sum of the positive-sequence voltage amplitude and the negative-sequence voltage amplitude, and the second regulation coefficient is in a direct proportion to the zero-sequence current amplitude.

In some embodiments of this application, the third regulation coefficient for the positive correlation between the negative-sequence current amplitude and the negative-sequence voltage amplitude may be further adaptively adjusted, so that the third regulation coefficient is in an inverse proportion to a sum of the positive-sequence voltage amplitude and the negative-sequence voltage amplitude, and the third regulation coefficient is in an inverse proportion to the zero-sequence current amplitude; and the fourth regulation coefficient for the negative correlation between the negative-sequence current amplitude and the zero-sequence voltage amplitude is adaptively adjusted, so that the fourth regulation coefficient is in an inverse proportion to a sum of the positive-sequence voltage amplitude and the negative-sequence voltage amplitude, and the fourth regulation coefficient is in a direct proportion to the zero-sequence current amplitude.

In some embodiments of this application, the fifth regulation coefficient for the positive correlation between the zero-sequence current amplitude and the negative-sequence voltage amplitude may be further adaptively adjusted, so that the fifth regulation coefficient is in an inverse proportion to the zero-sequence voltage amplitude, and the fifth regulation coefficient is in a direct proportion to the positive-sequence current amplitude; and the sixth regulation coefficient for the negative correlation between the zero-sequence current amplitude and the positive-sequence voltage amplitude is adaptively adjusted, so that the sixth regulation coefficient is in an inverse proportion to the zero-sequence voltage amplitude, and the sixth regulation coefficient is in a direct proportion to the negative-sequence current amplitude.

In some embodiments of this application, the positive-sequence current, the negative-sequence current, and the zero-sequence current that are output by the power conversion circuit are controlled in step S30. Specifically, when a total current amplitude of the positive-sequence current amplitude, the negative-sequence current amplitude, and the zero-sequence current amplitude is greater than a specified current limit amplitude, the positive-sequence current amplitude may be adjusted to be not greater than a first current limit value, the negative-sequence current amplitude may be adjusted to be not greater than a second current limit value, and the zero-sequence current amplitude may be adjusted to be not greater than a third current limit value. The first current limit value is a product of the positive-sequence current amplitude before adjustment and a ratio of the current limit amplitude to the total current amplitude, the second current limit value is a product of the negative-sequence current amplitude before adjustment and the ratio of the current limit amplitude to the total current amplitude, and the third current limit value is a product of the zero-sequence current amplitude before adjustment and the ratio of the current limit amplitude to the total current amplitude.

In some embodiments of this application, a positive-sequence active current value and a positive-sequence reactive current value of the positive-sequence current may be further controlled to meet the following: the positive-sequence reactive current value is in a positive correlation with a positive-sequence voltage dip depth, and the positive-sequence voltage dip depth is a difference between a preset regulation voltage amplitude and the positive-sequence voltage amplitude; and the positive-sequence active current value is a principal square root of a difference between the first current limit value and a square of the positive-sequence reactive current value.

In some embodiments of this application, a negative-sequence active current value and a negative-sequence reactive current value of the negative-sequence current may be further controlled to meet the following: the negative-sequence active current value is a weighted summation value of the negative-sequence voltage d-axis component and the negative-sequence voltage q-axis component, a value range of a weight of the negative-sequence voltage d-axis component during weighted summation is [-10, 10], and a value range of a weight of the negative-sequence voltage q-axis component during weighted summation is [-10, 10]; and the negative-sequence reactive current value is a weighted summation value of the negative-sequence voltage d-axis component and the negative-sequence voltage q-axis component, a value range of a weight of the negative-sequence voltage d-axis component during weighted summation is [-10, 10], and a value range of a weight of the negative-sequence voltage q-axis component during weighted summation is [-10, 10].

In some embodiments of this application, a zero-sequence current real component and a zero-sequence current imaginary component of the zero-sequence current may be further controlled to meet the following: the zero-sequence current real component is a weighted summation value of the zero-sequence voltage real component and the zero-sequence voltage imaginary component, a value range of a weight of the zero-sequence voltage real component during weighted summation is [-10, 10], and a value range of a weight of the zero-sequence voltage imaginary component during weighted summation is [-10, 10]; and the zero-sequence current imaginary component is a weighted summation value of the zero-sequence voltage real component and the zero-sequence voltage imaginary component, a value range of a weight of the zero-sequence voltage real component during weighted summation is [-10, 10], and a value range of a weight of the zero-sequence voltage imaginary component during weighted summation is [-10, 10].

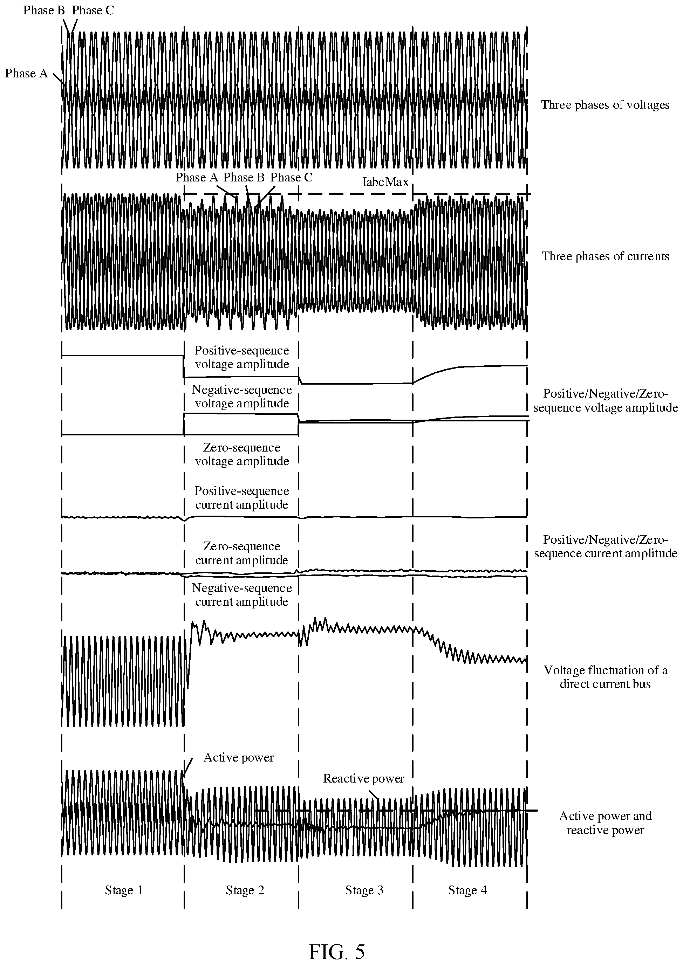

Refer to FIG. 5. Verification effect is compared after current control is performed according to different control policies when an asymmetric fault occurring in a power grid is a single-phase voltage dip. A verification result includes comparison of three phases of voltages and three phases of currents that are output by the power conversion circuit, a fluctuation of a direct current bus voltage, and fluctuations of active power and reactive power. A stage 1 and A stage 2 are respectively existing current regulation and control manners, and a stage 3 and a stage 4 are current control manners provided in this embodiment of this application.

In the stage 1, only a positive-sequence current is adjusted. It can be learned from a verification result that the three phases of currents output by the power conversion circuit are symmetrical, there is a double-frequency fluctuation in both the active power and reactive power, and there is a double-frequency fluctuation in the direct current bus voltage.

In the stage 2, a positive-sequence current and a negative-sequence current are both adjusted. It can be learned that from a verification result that the three phases of currents output by the power conversion circuit are asymmetric, one phase of current reaches a current limit value IabcMax. The negative-sequence current completely suppresses the double-frequency fluctuation of the active power, and the voltage fluctuation of the direct current bus is basically suppressed, but an active power input decreases.

In the stage 3, a positive-sequence current, a negative-sequence current, and a zero-sequence current are all adjusted. It can be learned from a verification result that symmetry of the three phases of currents output by the power conversion circuit is improved, and the three phases of currents do not reach a current limit value IabcMax of one phase of current. The negative-sequence current and the zero-sequence current jointly suppress the double-frequency fluctuation of the active power, and the voltage fluctuation of the direct current bus is completely suppressed.

In the stage 4, a positive-sequence current, a negative-sequence current, and a zero-sequence current are all adjusted, and the first to sixth regulation coefficients are adaptively adjusted with the change of the power grid condition. It can be learned from a verification result that on the basis of increasing symmetry of the three phases of currents output by the power conversion circuit, amplitudes of the three phases of currents increase simultaneously, and the maximum phase of current of the three phases of currents reaches a current limit value IabcMax of one phase of current. The negative-sequence current and the zero-sequence current jointly suppress the double-frequency fluctuation of the active power, an active power level increases, and the voltage fluctuation of the direct current bus is completely suppressed.

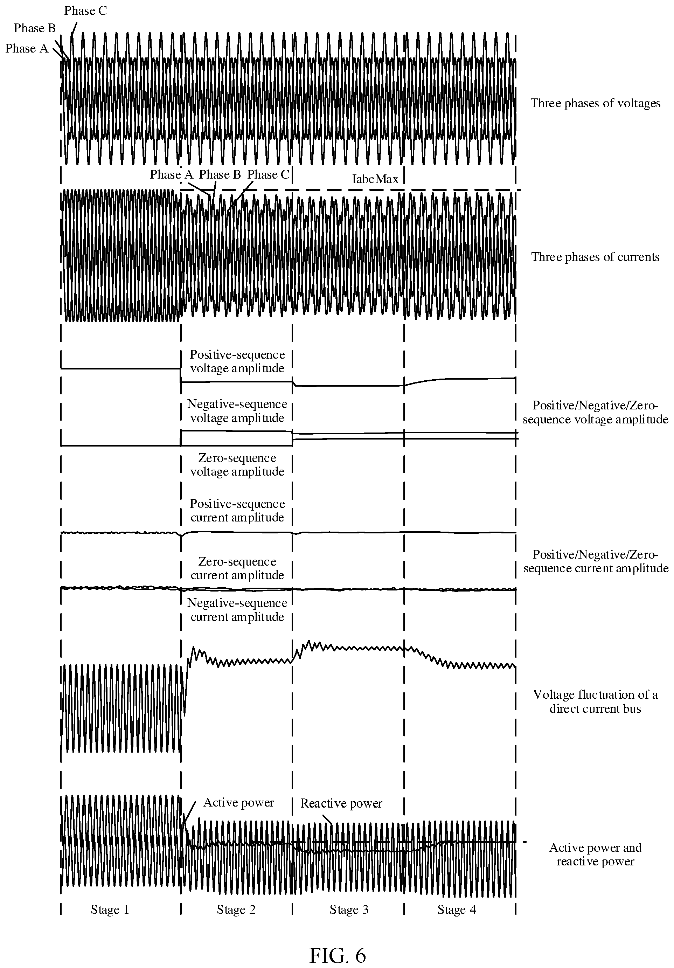

Refer to FIG. 6. Verification effect is compared after current control is performed according to different control policies when an asymmetric fault occurring in a power grid is a two-phase voltage dip. A verification result includes comparison of three phases of voltages and three phases of currents that are output by the power conversion circuit, a fluctuation of a direct current bus voltage, and fluctuations of active power and reactive power. A stage 1 and A stage 2 are respectively existing current regulation and control manners, and a stage 3 and a stage 4 are current control manners provided in this embodiment of this application.

In the stage 1, only a positive-sequence current is adjusted. It can be learned from a verification result that the three phases of currents output by the power conversion circuit are symmetrical, there is a double-frequency fluctuation in both the active power and reactive power, and there is a double-frequency fluctuation in the direct current bus voltage.

In the stage 2, a positive-sequence current and a negative-sequence current are both adjusted. It can be learned from a verification result that the three phases of currents output by the power conversion circuit are asymmetric, one phase of current reaches a current limit value IabcMax. The negative-sequence current completely suppresses the double-frequency fluctuation of the active power, and the voltage fluctuation of the direct current bus is basically suppressed, but an active power input decreases.

In the stage 3, a positive-sequence current, a negative-sequence current, and a zero-sequence current are all adjusted. It can be learned from a verification result that symmetry of the three phases of currents output by the power conversion circuit is improved, and the three phases of currents do not reach a current limit value IabcMax of one phase of current. The negative-sequence current and the zero-sequence current jointly suppress the double-frequency fluctuation of the active power, and the voltage fluctuation of the direct current bus is completely suppressed.

In the stage 4, a positive-sequence current, a negative-sequence current, and a zero-sequence current are all adjusted, and the first to sixth regulation coefficients are adaptively adjusted with the change of the power grid condition. It can be learned from a verification result that on the basis of increasing symmetry of the three phases of currents output by the power conversion circuit, amplitudes of the three phases of currents increase simultaneously, and the maximum phase of current of the three phases of currents reaches a current limit value IabcMax of one phase of current. The negative-sequence current and the zero-sequence current jointly suppress the double-frequency fluctuation of the active power, an active power level increases, and the voltage fluctuation of the direct current bus is completely suppressed.

It is clearly that a person skilled in the art can make various modifications and variations to this application without departing from the scope of this application. In this case, this application is intended to cover these modifications and variations of this application provided that they fall within the scope of protection defined by the claims of this application and their equivalent technologies.

**Claims**

1. A power converter, comprising a three-phase four-wire power conversion circuit and a controller, wherein the controller is configured to: when a value of any phase of voltage of three phases of voltages output by the three-phase four-wire power conversion circuit is less than a first threshold, and a difference between values of any two phases of voltages is greater than a second threshold, adjust, based on voltage amplitudes of a positive-sequence voltage, a negative-sequence voltage, and a zero-sequence voltage that are output by the three-phase four-wire power conversion circuit, current amplitudes of a positive-sequence current, a negative-sequence current, and a zero-sequence current that are output by the three-phase four-wire power conversion circuit, so that an input voltage fluctuation of the three-phase four-wire power conversion circuit to be mitigated.

2. The power converter according to claim 1, wherein the adjusting, based on voltage amplitudes of a positive-sequence voltage, a negative-sequence voltage, and a zero-sequence voltage that are output by the three-phase four-wire power conversion circuit, current amplitudes of a positive-sequence current, a negative-sequence current, and a zero-sequence current that are output by the three-phase four-wire power conversion circuit, comprises:

adjusting a correlation between the zero-sequence current amplitude and the negative-sequence voltage amplitude and a correlation between the zero-sequence current amplitude and the positive-sequence voltage amplitude;
adjusting a correlation between the positive-sequence current amplitude and the positive-sequence voltage amplitude and a correlation between the positive-sequence current amplitude and the zero-sequence voltage amplitude; and

adjusting a correlation between the negative-sequence current amplitude and the negative-sequence voltage amplitude and a correlation between the negative-sequence current amplitude and the zero-sequence voltage amplitude.

3. The power converter according to claim 1 or 2, wherein the adjusting, based on voltage amplitudes of a positive-sequence voltage, a negative-sequence voltage, and a zero-sequence voltage that are output by the three-phase four-wire power conversion circuit, current amplitudes of a positive-sequence current, a negative-sequence current, and a zero-sequence current that are output by the three-phase four-wire power conversion circuit, comprises:

control the zero-sequence current amplitude to be in a positive correlation with the negative-sequence voltage amplitude, and the zero-sequence current amplitude to be in a negative correlation with the positive-sequence voltage amplitude;

control the positive-sequence current amplitude to be in a positive correlation with the positive-sequence voltage amplitude, and the positive-sequence current amplitude to be in a positive correlation with the zero-sequence voltage amplitude; and

control the negative-sequence current amplitude to be in a positive correlation with the negative-sequence voltage amplitude, and the negative-sequence current amplitude to be in a negative correlation with the zero-sequence voltage amplitude.

4. The power converter according to any one of claims 1 to 3,

wherein the adjusting, based on voltage amplitudes of a positive-sequence voltage, a negative-sequence voltage, and a zero-sequence voltage that are output by the three-phase four-wire power conversion circuit, current amplitudes of a positive-sequence current, a negative-sequence current, and a zero-sequence current that are output by the three-phase four-wire power conversion circuit, comprises:

control the positive-sequence current amplitude based on a weighted summation value of the positive-sequence voltage amplitude and the zero-sequence voltage amplitude, wherein a first regulation coefficient is a weight of the positive-sequence voltage amplitude during weighted summation, and a value range of the first regulation coefficient is [0, 10]; and a second regulation coefficient is a weight of the zero-sequence voltage amplitude during weighted summation, and a value range of the second regulation coefficient is [0, 10];

control the negative-sequence current amplitude based on a weighted difference between the negative-sequence voltage amplitude and the zero-sequence voltage amplitude, wherein a third regulation coefficient is a weight of the negative-sequence voltage amplitude during weighted difference calculation, and a value range of the third regulation coefficient is [0, 10]; and a fourth regulation coefficient is a weight of the zero-sequence voltage amplitude during weighted difference calculation, and a value range of the fourth regulation coefficient is [0, 10]; and

control the negative-sequence current amplitude based on a smaller value in a weighted difference between the negative-sequence voltage amplitude and the positive-sequence voltage amplitude and a maximum zero-sequence current limit value allowed to flow through an N wire of the three-phase four-wire power converter, wherein a fifth regulation coefficient is a weight of the negative-sequence voltage amplitude during weighted difference calculation, and a value range of the fifth regulation coefficient is [0, 10]; and a sixth regulation coefficient is a weight of the positive-sequence voltage amplitude during weighted difference calculation, and a value range of the sixth regulation coefficient is [0, 10].

5. The power converter according to claim 4, wherein the controller is further configured to:

control the first regulation coefficient to be in an inverse proportion to a sum of the positive-sequence voltage amplitude and the negative-sequence voltage amplitude, and the first regulation coefficient to be in an inverse proportion to the zero-sequence current amplitude; and

control the second regulation coefficient to be in an inverse proportion to the sum of the positive-sequence voltage amplitude and the negative-sequence voltage amplitude, and the second regulation coefficient to be in a direct proportion to the zero-sequence current amplitude.

6. The power converter according to claim 4, wherein the controller is further configured to:

control the third regulation coefficient to be in an inverse proportion to a sum of the positive-sequence voltage amplitude and the negative-sequence voltage amplitude, and the third regulation coefficient to be in an inverse proportion to the zero-sequence current amplitude; and
control the fourth regulation coefficient to be in an inverse proportion to the sum of the positive-sequence voltage amplitude and the negative-sequence voltage amplitude, and the fourth regulation coefficient to be in a direct proportion to the zero-sequence current amplitude.

7. The power converter according to claim 4, wherein the controller is further configured to:

control the fifth regulation coefficient to be in an inverse proportion to the zero-sequence voltage amplitude, and the fifth regulation coefficient to be in a direct proportion to the positive-sequence current amplitude; and control the sixth regulation coefficient to be in an inverse proportion to the zero-sequence voltage amplitude, and the sixth regulation coefficient to be in a direct proportion to the negative-sequence current amplitude.

8. The power converter according to any one of claims 1 to 7, wherein the controller is further configured to:

when a total current amplitude of a sum of the positive-sequence current amplitude, the negative-sequence current amplitude, and the zero-sequence current amplitude is greater than a specified current limit amplitude, adjust the positive-sequence current amplitude to be not greater than a first current limit value, adjust the negative-sequence current amplitude to be not greater than a second current limit value, and adjust the zero-sequence current amplitude to be not greater than a third current limit value, wherein the first current limit value is a product of the positive-sequence current amplitude before adjustment and a ratio of the current limit amplitude to the total current amplitude, the second current limit value is a product of the negative-sequence current amplitude before adjustment and the ratio of the current limit amplitude to the total current amplitude, and the third current limit value is a product of the zero-sequence current amplitude before adjustment and the ratio of the current limit amplitude to the total current amplitude.

9. The power converter according to any one of claims 1 to 8, wherein the controller is further configured to:
control a positive-sequence active current value and a positive-sequence reactive current value that are output by the three-phase four-wire power conversion circuit to meet the following:

the positive-sequence reactive current value is in a positive correlation with a positive-sequence voltage dip depth, and the positive-sequence voltage dip depth is a difference between a preset regulation voltage amplitude and the positive-sequence voltage amplitude; and the positive-sequence active current value is a principal square root of a difference between the first current limit value and a square of the positive-sequence reactive current value.

10. The power converter according to any one of claims 1 to 8, wherein the controller is further configured to:
control a negative-sequence active current value and a negative-sequence reactive current value that are output by the three-phase four-wire power conversion circuit to meet the following:

the negative-sequence active current value is a weighted summation value of a negative-sequence voltage d-axis component and a negative-sequence voltage q-axis component, a value range of a weight of the negative-sequence voltage d-axis component during weighted summation is [-10, 10], and a value range of a weight of the negative-sequence voltage q-axis component during weighted summation is [-10, 10]; and the negative-sequence reactive current value is a weighted summation value of the negative-sequence voltage d-axis component and the negative-sequence voltage q-axis component, a value range of a weight of the negative-sequence voltage d-axis component during weighted summation is [-10, 10], and a value range of a weight of the negative-sequence voltage q-axis component during weighted summation is [-10, 10].

11. The power converter according to any one of claims 1 to 8, wherein the controller is further configured to:
control a zero-sequence current real component and a zero-sequence current imaginary component that are output by the three-phase four-wire power conversion circuit, to meet the following:

the zero-sequence current real component is a weighted summation value of a zero-sequence voltage real component and a zero-sequence voltage imaginary component, a value range of a weight of the zero-sequence voltage real component during weighted summation is [-10, 10], and a value range of a weight of the zero-sequence voltage imaginary component during weighted summation is [-10, 10]; and the zero-sequence current imaginary component is a weighted summation value of the zero-sequence voltage real component and the zero-sequence voltage imaginary component, a value range of a weight of the zero-sequence voltage real component during weighted summation is [-10, 10], and a value range of a weight of the zero-sequence voltage imaginary component during weighted summation is [-10, 10].

12. An energy storage system, comprising an energy storage unit and the power converter according to any one of claims 1 to 11, wherein
the energy storage unit is connected to a three-phase four-wire power conversion circuit in the power converter, and the three-phase four-wire power conversion circuit is configured to convert a direct current stored in the energy storage unit into an alternating current, and output the alternating current to a power grid.

13. A control method for a power converter, wherein the power converter comprises a three-phase four-wire power conversion circuit and a controller, the controller is configured to perform the control method, and the control method comprises:
when a value of any phase of voltage of values of three phases of voltages output by the three-phase four-wire power conversion circuit is less than a first threshold, and a difference between values of any two phases of voltages is greater than a second threshold, adjust, based on voltage amplitudes of a positive-sequence voltage, a negative-sequence voltage, and a zero-sequence voltage that are output by the three-phase four-wire power conversion circuit, current amplitudes of a positive-sequence current, a negative-sequence current, and a zero-sequence current that are output by the three-phase four-wire power conversion circuit, so that an input voltage fluctuation of the three-phase four-wire power conversion circuit to be mitigated.

14. The control method according to claim 13, wherein the adjusting, based on voltage amplitudes of a positive-sequence voltage, a negative-sequence voltage, and a zero-sequence voltage that are output by the three-phase four-wire power conversion circuit, current amplitudes of a positive-sequence current, a negative-sequence current, and a zero-sequence current that are output by the three-phase four-wire power conversion circuit, comprises:

adjusting a correlation between the zero-sequence current amplitude and the negative-sequence voltage amplitude and a correlation between the zero-sequence current amplitude and the positive-sequence voltage amplitude;
adjusting a correlation between the positive-sequence current amplitude and the positive-sequence voltage amplitude and a correlation between the positive-sequence current amplitude and the zero-sequence voltage amplitude; and
adjusting a correlation between the negative-sequence current amplitude and the negative-sequence voltage amplitude and the negative correlation between the negative-sequence current amplitude and the zero-sequence voltage amplitude.

15. The control method according to claim 13 or 14, wherein the adjusting, based on voltage amplitudes of a positive-sequence voltage, a negative-sequence voltage, and a zero-sequence voltage that are output by the three-phase four-wire power conversion circuit, current amplitudes of a positive-sequence current, a negative-sequence current, and a zero-sequence current that are output by the three-phase four-wire power conversion circuit, comprising:

controlling the zero-sequence current amplitude to be in a positive correlation with the negative-sequence voltage amplitude, and the zero-sequence current amplitude to be in a negative correlation with the positive-sequence voltage amplitude;
controlling the positive-sequence current amplitude to be in a positive correlation with the positive-sequence voltage amplitude, and the positive-sequence current amplitude to be in a positive correlation with the zero-sequence voltage amplitude; and
controlling the negative-sequence current amplitude to be in a positive correlation with the negative-sequence voltage amplitude, and the negative-sequence current amplitude to be in a negative correlation with the zero-sequence voltage amplitude.

Energy storage unit or photovoltaic module — Power converter — $Lf$ — $Lg$ — $Vg$

FIG. 1a

Energy storage unit or photovoltaic module — DC/DC — Power converter — $Lf$ — $Lg$ — $Vg$

FIG. 1b

Controller — Detection circuit

Energy storage unit — Three-phase four-wire power conversion circuit

Power converter

FIG. 2a

FIG. 2b

Separately calculate a positive-sequence voltage amplitude, a negative-sequence voltage amplitude, and a zero-sequence voltage amplitude based on values of three phases of voltages output by a power conversion circuit ⟋ S1

Determine, based on the positive-sequence voltage amplitude, the negative-sequence voltage amplitude, and the zero-sequence voltage amplitude that are obtained through calculation, whether an asymmetric fault occurs ⟋ S2

Yes

Determine a positive-sequence current amplitude, a negative-sequence current amplitude, and a zero-sequence current amplitude based on the positive-sequence voltage amplitude, the negative-sequence voltage amplitude, and the zero-sequence voltage amplitude ⟋ S3

Determine a first current limit value, a second current limit value, and a third current limit value based on the positive-sequence current amplitude, the negative-sequence current amplitude, and the zero-sequence current amplitude that are obtained through calculation ⟋ S4

Perform amplitude limiting on the positive-sequence current based on the first current limit value, perform amplitude limiting on the negative-sequence current based on the second current limit value, and perform amplitude limiting on the zero-sequence current based on the third current limit value ⟋ S5

FIG. 3

| | |
|---|---|
| Obtain values of three phases of voltages output by a power conversion circuit | S10 |

Determine, based on the values of the three phases of voltages output by the power conversion circuit, whether an asymmetric fault occurs in a power grid — S20

Yes

Control, based on voltage amplitudes of a positive-sequence current, a negative-sequence current, and a zero-sequence current that are output by the three-phase four-wire power conversion circuit, current amplitudes of the positive-sequence current, the negative-sequence current, and the zero-sequence current, so that an input voltage fluctuation of the three-phase four-wire power conversion circuit to be mitigated — S30

FIG. 4

Phase B  Phase C

Phase A

Three phases of voltages

Phase A  Phase B  Phase C          IabcMax

Three phases of currents

Positive-sequence
voltage amplitude

Negative-sequence
voltage amplitude

Positive/Negative/Zero-
sequence voltage amplitude

Zero-sequence
voltage amplitude

Positive-sequence
current amplitude

Zero-sequence
current amplitude

Positive/Negative/Zero-
sequence current amplitude

Negative-sequence
current amplitude

Voltage fluctuation of a
direct current bus

Active power

Reactive power

Active power and
reactive power

Stage 1          Stage 2          Stage 3          Stage 4

FIG. 5

FIG. 6

## EUROPEAN SEARCH REPORT

Application Number

EP 24 20 0322

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 112 994 104 B (UNIV HUNAN) 17 May 2022 (2022-05-17) * abstract; figures 1-3 * | 1-3,9, 12-15 | INV. H02M1/32 |
| Y | JOSHI JYOTI ET AL: "A Comprehensive Review of Control Strategies to Overcome Challenges During LVRT in PV Systems", IEEE ACCESS, IEEE, USA, vol. 9, 30 August 2021 (2021-08-30), pages 121804-121834, XP011877026, DOI: 10.1109/ACCESS.2021.3109050 [retrieved on 2021-09-08] * page 121824; figure 4 * | 1-3,9, 12-15 | |
| A | CN 110 838 731 B (UNIV HUNAN) 13 July 2021 (2021-07-13) * abstract; figures 1-3 * | 1-15 | |
| Y | SHUAI ZHIKANG ET AL: "Overcurrent and its Restraining Method of PQ-Controlled Three-Phase Four-Wire Converter Under Asymmetrical Grid Fault", IEEE JOURNAL OF EMERGING AND SELECTED TOPICS IN POWER ELECTRONICS, IEEE, PISCATAWAY, NJ, USA, vol. 7, no. 3, 1 September 2019 (2019-09-01), pages 2057-2069, XP011737171, ISSN: 2168-6777, DOI: 10.1109/JESTPE.2018.2885553 [retrieved on 2019-07-30] * page 2060 - page 2063; figures 1,6 * | 9 | TECHNICAL FIELDS SEARCHED (IPC) H02M |

The present search report has been drawn up for all claims

| Place of search | Date of completion of the search | Examiner |
|---|---|---|
| The Hague | 4 December 2024 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 0322

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2024

| Patent document cited in search report | Publication date | Patent family member(s) | Publication date |
|---|---|---|---|
| CN 112994104 B | 17-05-2022 | NONE | |
| CN 110838731 B | 13-07-2021 | NONE | |

EPO FORM P0459

For more details about this annex : see Official Journal of the European Patent Office, No. 12/82